# EUROPÄISCHE PATENTSCHRIFT

(11) **EP 4 069 790 B1**
(45) Veröffentlichungstag und Bekanntmachung des Hinweises auf die Patenterteilung: **18.02.2026**
(21) Anmeldenummer: 19817659.6
(22) Anmeldetag: 06.12.2019
(51) Int. Cl.: C09D 171/08, C08G 65/336, C09J 171/02, C09J 183/06

(54) **VERNETZBARE ZUSAMMENSETZUNGEN AUF BASIS VON ORGANYLOXYSILANTERMINIERTEN POLYMEREN**
CROSS-LINKABLE COMPOSITIONS BASED ON ORGANYL OXYSILANE-TERMINATED POLYMERS
COMPOSITIONS RÉTICULABLES À BASE DE POLYMÈRES À TERMINAISON ORGANYLOXYSILANE

(43) Veröffentlichungstag der Anmeldung: 12.10.2022
(73) Patentinhaber: Wacker Chemie AG, 81671 München (DE)
(72) Erfinder: STANJEK, Volker, 84539 Ampfing (DE); BAUER, Andreas, 84375 Kirchdorf am Inn (DE); ZANDER, Lars, 84503 Altötting (DE)
(74) Vertreter: Mieskes, Klaus Theoderich
(86) Internationale Anmeldenummer: PCT/EP2019/084076
(87) Internationale Veröffentlichungsnummer: WO 2021/110281

(56) Entgegenhaltungen:
- DE-A1- 102014 210 309

## Beschreibung

Die Erfindung betrifft vernetzbare Zusammensetzungen von silanvernetzenden Polymeren, Verfahren zu deren Herstellung und deren Verwendung als Kleb- und Dichtstoffe.

Polymersysteme, die über reaktive Alkoxysilylgruppen verfügen, sind seit langem bekannt. Bei Kontakt mit Wasser bzw. Luftfeuchtigkeit sind diese alkoxysilanterminierten Polymere bereits bei Raumtemperatur in der Lage, unter Abspaltung der Alkoxygruppen miteinander zu kondensieren. Eine der wichtigsten Anwendungen von derartigen Materialien ist die Herstellung von Klebstoffen, insbesondere von elastischen Klebesystemen, sowie von Dichtstoffen.

So zeigen Klebstoffe auf Basis von alkoxysilanvernetzenden Polymeren im ausgehärteten Zustand sehr gute mechanische Eigenschaften, da sie sowohl reißfest als auch hochelastisch sein können. Ein weiterer entscheidender Vorteil silanvernetzender Systeme gegenüber zahlreichen anderen Kleb- und Dichtstofftechnologien (z.B. gegenüber isocyanatvernetzenden Systemen) ist die toxikologische Unbedenklichkeit der Prepolymere.

Dabei werden in vielen Anwendungen einkomponentige Systeme (1K-Systeme) bevorzugt, die bei Kontakt mit Luftfeuchtigkeit aushärten. Die entscheidenden Vorteile von einkomponentigen Systemen ist vor allem deren sehr leichte Applizierbarkeit, da hier keine Mischung verschiedener Klebstoffkomponenten durch den Anwender erforderlich ist. Neben der Zeit- und Arbeitsersparnis und der sicheren Vermeidung eventueller Dosierungsfehler, ist bei einkomponentigen Systeme auch nicht die Notwendigkeit gegeben, den Kleb-/Dichtstoff innerhalb eines meist recht engen Zeitfensters zu verarbeiten, wie dies bei mehrkomponentigen Systemen nach erfolgter Durchmischung der beiden Komponenten der Fall ist.

Nachteilig bei den meisten alkoxysilanvernetzenden Systemen entsprechend des Standes der Technik ist jedoch die geringe Reaktivität der entsprechenden Polymere gegenüber Feuchtigkeit, was eine aggressive Katalyse erforderlich macht. Die entsprechenden Mischungen enthalten daher typischerweise erhebliche Mengen toxikologisch bedenklicher Zinnkatalysatoren.

Hier ist der Einsatz von sogenannten α-silanterminierten Polymeren von Vorteil, die über reaktive Alkoxysilylgruppen verfügen, die durch einen Methylenspacer, einen sogenannten α-Spacer, mit einer benachbarten Urethaneinheit verbunden sind. Diese Verbindungsklasse ist wesentlich reaktiver als die herkömmlichen γ-silanterminierten Polymere, bei denen die Alkoxysilylgruppen über eine Propylenspacer, einen sogenannten γ-Spacer, mit einem benachbarten Heteroatom verbunden sind. Die α-silanterminierten Polymere benötigen in der Regel weder Zinnkatalysatoren noch starke Säuren oder Basen, um bei Luftkontakt hohe Aushärtgeschwindigkeiten zu erreichen. Kommerziell verfügbare α-silanterminierte Polymere sind GENIOSIL^{®} STP-E10 oder GENIOSIL^{®} STP-E30 der Wacker-Chemie AG, D-München.

Eine Einschränkung dieser sogenannten α-Technologie liegt jedoch in der Tatsache, dass die kommerziell erhältlichen α-silanfunktionellen Polymere inklusive der o.g. Wacker-Produkte mit Dimethoxy-methylsilyl-Gruppen terminiert sind, und keine Produkte mit Trimethoxysilyl-Endgruppen verfügbar sind.

Für die meisten Endprodukte im Kleb- und Dichtstoffmarkt sind die existenten α-silanterminierten Polymere hervorragend geeignet und in vielen Fällen vergleichbaren konventionellen di-oder trimethoxysilyl-funktionellen Produkten sogar überlegen.

Es existieren aber auch Anwendungen, für die Polymere mit α-Trimethoxysilan-Endgruppen wünschenswert wären.

Hier sind u.a. die folgenden Beispiele zu nennen:
- Extrem schnelle Klebstoffe, sogenannte "Sekundenkleber", da α-Trimethoxysilylgruppen nochmals reaktiver sind als die korrespondierenden α-Dimethoxymethylsilylendgruppen.
- Zinnkatalysatorfreie Parkettklebstoffe, die eine lange Offenzeit besitzen, danach aber einen möglichst zügigen Härteaufbau zeigen. Hier sind ausschließlich mit α-Dimethoxysilylgruppen terminierte Polymere, die bei ihrer Härtung zu einem Netzwerk mit vergleichsweise geringer Vernetzungsdichte führen, korrespondierenden α-Trimethoxysilyl-Systemen unterlegen.
- Zinnfreie, hoch- oder niedermodulige Dichtstoffe, die gleichzeitig eine gute Rückstellung zeigen. Auch hier lässt sich letztere mit trimethoxysilyl-funktionellen Polymeren leichter erreichen als mit vergleichbaren dimethoxysilylterminierten Produkten.

Silanterminierte Polymere mit α-Trimethoxysilyl-Endgruppen sind prinzipiell seit langem bekannt und mehrfach vorbeschrieben, u.a. bereits in EP-A 1 414 909. Nachteilig ist jedoch, dass sie auf Grund ihrer extrem hohen Reaktivität kaum noch handhabbar sind und zudem nicht mit herkömmlichen Wasserfängern wie z.B. Vinyltrimethoxysilan stabilisiert werden können.

Letztere werden in nahezu sämtlichen praxisrelevanten Kleb- und Dichtstoffformulierungen auf Basis silanterminierter Polymere eingesetzt, da der Eintrag kleinerer Wassermengen, insbesondere in Form des auf den Oberflächen der eingesetzten Füllstoffe absorbierten Wassers, kaum verhindert werden kann. Zudem ist auch kein Gebinde, weder Tube noch Kartusche perfekt dicht, so dass Wasserfänger auch in füllstofffreien Systemen unverzichtbar sind.

Wasserfänger wie Vinyltrimethoxysilan fangen diese Wasserspuren ab, indem sie selbst mit ihnen reagieren und damit eine vorzeitige Kondensation der silanterminierten Polymere und den damit verbundenen Viskositätsaufbau ganz oder zumindest weitgehend verhindern.

Ist nun aber, wie im Falle von α-trimethoxysilanterminierten Polymeren, das vernetzbare Polymer gegenüber den o.g. Wasserspuren deutlich reaktiver als der Wasserfänger, so kann dieser seine Aufgabe nicht mehr wahrnehmen. Dies hat zur Folge, dass Kleb- und Dichtstoffe auf Basis von diesen extrem hochreaktiven Polymeren ebenfalls hochreaktive Wasserfänger benötigen.

Eine Lösung kann hier - wie in EP-A 1 414 909 beschrieben - der Einsatz von hochreaktiven α-Silanen bestehen, die ebenso wie das Polymer über Alkoxysilylgruppen verfügen, die nur durch einen Methylenspacer von einem benachbarten Heteroatom getrennt sind. Nachteilig an dieser Lösung ist jedoch, dass diese α-Silane sehr teuer sind, was ihren Einsatz ökonomisch in dem preissensiblen Markt für Kleb- und Dichtstoffe nahezu unmöglich macht.

Eine denkbare Möglichkeit, diese Probleme von Kleb- und Dichtstoffen, die ausschließlich auf mit α-Trimethoxysilylgruppen terminierten Polymeren basieren, zu lösen, wäre der Einsatz von "gemischten Systemen", deren Polymere zum Teil mit α-Trimethoxysilylgruppen und zum anderen Teil mit herkömmlichen, weniger reaktiven Trimethoxysilylgruppen funktionalisiert sind. Ein derartiger Ansatz wird in EP-A 2 222 751 beschrieben. Doch auch in EP-A 2 222 751 werden konkret ausschließlich Systeme beschrieben, die bezogen auf den Gehalt an alkoxysilanterminierten Polymeren mehr als 2% N-Trimethoxysilylmethyl-O-Methylcarbamat, d.h. eines der o.g. teuren α-Silane, enthalten. Das o.g. Problem, dass der Einsatz dieser α-Silane ökonomisch nahezu unmöglich ist, wurde somit weder von EP 2 222 751 noch im nachfolgenden Jahrzehnt gelöst.

EP3149095A1 offenbart vernetzbare Kleberzusammensetzungen, die siloxylterminierte Polyether enthalten, die Propy1spacer beinhalten aber keine Methylspacer.

Somit bestand die die Aufgabe, eine Zusammensetzung auf Basis von mit Trimethoxysilangruppen terminierten Polymeren zu finden, welche die o.g. Nachteile des Standes der Technik nicht mehr aufweist.

Gegenstand der Erfindung sind vernetzbare Zusammensetzungen (Z) enthaltend
(A) 100 Gewichtsteile Verbindungen der Formel

   Y-[(CR¹₂)ₐ-Si(OR)₃]ₓ (I),

   wobei
   - Y: einen x-wertigen, über Stickstoff oder Sauerstoff gebundenen Polymerrest bedeutet,
   - R: gleich oder verschieden sein kann und Wasserstoffatom oder einen einwertigen, gegebenenfalls substituierten Kohlenwasserstoffrest darstellt,
   - R¹: gleich oder verschieden sein kann und Wasserstoffatom oder einen einwertigen, gegebenenfalls substituierten Kohlenwasserstoffrest darstellt, der über Stickstoff, Phosphor, Sauerstoff, Schwefel oder Carbonylgruppe an das Kohlenstoffatom angebunden sein kann,
   - x: eine ganze Zahl von 2 bis 10, bevorzugt 2 oder 3, besonders bevorzugt 2, ist und
   - a: eine ganze Zahl von 1 bis 10, bevorzugt 1, 3 oder 4, besonders bevorzugt 1 oder 3, ist,
   mit der Maßgabe, dass in Komponente (A) in 5 bis 60% aller Einheiten [(CR¹₂)ₐ-Si(OR)₃] a gleich 1 ist und in mindestens 5% aller Verbindungen der Formel (I) pro Molekül mindestens ein a gleich 1 ist und mindestens ein a für eine ganze Zahl von 2 bis 10 steht,
(B) mindestens 0,1 Gewichtsteile Silane ausgewählt aus Tetraethoxysilan und Silanen der Formel

   R⁴-Si(CH₃)_{b}(OR²)_{3-b} (II),

   wobei
   - R²: gleich oder verschieden sein kann und Wasserstoffatom oder einen einwertigen, gegebenenfalls substituierten Kohlenwasserstoffrest darstellt,
   - R⁴: einen einwertigen, gegebenenfalls substituierten Kohlenwasserstoffrest, der durch Sauerstoffatome unterbrochenen sein kann, darstellt, der kein Stickstoffatom enthält, welches nicht direkt an eine Carbonylgruppe gebunden ist, und kein Heteroatom aufweist, welches nur durch ein einziges Kohlenstoffatom von dem Siliciumatom getrennt ist, und
   - b: 0 oder 1, bevorzugt 0, ist sowie
(C) höchstens 2 Gewichtsteile einer oder mehrerer Silane der Formel

   X-CH₂-SiR⁶_{c}(OR⁵)_{3-c} (III),

   wobei
   - R⁵: gleich oder verschieden sein kann und Wasserstoffatom oder einen einwertigen, gegebenenfalls substituierten Kohlenwasserstoffrest darstellt,
   - R⁶: gleich oder verschieden sein kann und einen einwertigen, gegebenenfalls substituierten Kohlenwasserstoffrest darstellt,
   - X: eine Gruppe der Formel -NR⁷₂, -NR⁷-CO-R⁸, -NR⁷-CO-OR⁸, -NR⁷-CO-NR⁸₂, -OR⁷, -O-CO-R⁷, O-CO-OR⁷, O-CO-NR⁷₂ oder einen über N-Atom gebundenen Heterocyclus darstellt,
   - R⁷: gleich oder verschieden sein kann und Wasserstoffatom oder einen einwertigen, gegebenenfalls substituierten Kohlenwasserstoffrest mit 1 bis 6 Kohlenstoffatomen darstellt
   - R⁸: gleich oder verschieden sein kann und Wasserstoffatom oder einen einwertigen, gegebenenfalls substituierten Kohlenwasserstoffrest mit 1 bis 6 Kohlenstoffatomen darstellt und
   - c: 0 oder 1 ist.

Bei den Heteroatomen handelt es sich im Rahmen der Erfindung um Atome, die kein Kohlenstoff oder Wasserstoff sind.

Der Erfindung liegt die überraschende Entdeckung zugrunde, dass Polymere (A), die sowohl über hochreaktive α-Trimethoxysilylgruppen als auch über herkömmliche Trimethoxysilylgruppen, d.h. Trimethoxysilylgruppen der Formel (1) mit a ungleich 1, in den erfindungsgemäßen Mengenverhältnissen verfügen, auch mit herkömmlichen Wasserfängern wie mit Vinyltrimethoxysilan stabilisiert werden können und keine hochreaktiven α-Silan-Wasserfänger benötigen. Diese Erkenntnis ist umso überraschender, als dass nur Polymere (A), die einen gewissen Anteil an Polymeren enthalten, die innerhalb eines Moleküls sowohl α- als auch herkömmliche Trimethoxysilylgruppen enthalten, mit herkömmlichen Wasserfängern stabilisiert werden können, nicht aber Polymermischungen aus Polymeren, die ausschließlich hochreaktive α-Trimethoxysilylgruppen enthalten, mit Polymeren, deren Kettenenden ausschließlich mit herkömmlichen Trimethoxysilylgruppen terminiert sind.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest, iso-Octylreste und der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste R sind Halogenalkylreste, wie der 3,3,3-Trifluor-n-propylrest, der 2,2,2,2',2',2'-Hexafluorisopropylrest und der Heptafluorisopropylrest, sowie Halogenarylreste, wie der o-, m- und p-Chlorphenylrest.

Bevorzugt handelt es sich bei Rest R um einwertige Kohlenwasserstoffreste mit 1 bis 6 Kohlenstoffatomen, besonders bevorzugt um Alkylreste mit 1 oder 2 Kohlenstoffatomen, insbesondere um den Methylrest.

Beispiele für Reste R¹ sind Wasserstoffatom, die für R angegebenen Reste sowie über Stickstoff, Phosphor, Sauerstoff, Schwefel, Kohlenstoff oder Carbonylgruppe an das Kohlenstoffatom gebundene, gegebenenfalls substituierte Kohlenwasserstoffreste.

Bevorzugt handelt es sich bei Rest R¹ um Wasserstoffatom oder Kohlenwasserstoffreste mit 1 bis 20 Kohlenstoffatomen, insbesondere um Wasserstoffatom.

Vorzugsweise nimmt a bei 10% bis 45%, besonders bevorzugt bei 15% bis 40%, aller Einheiten [(CR¹₂)ₐ-Si(OR)₃] in Komponente (A) den Wert 1 an, wobei R und R¹ die oben dafür angegebene Bedeutung haben.

Vorzugsweise verfügen in Komponente (A) mindestens 10%, besonders bevorzugt mindestens 15%, aller Verbindungen der Formel (I) pro Molekül sowohl über mindestens eine Gruppe [(CR¹₂)-Si(OR)₃] als auch über mindestens eine Gruppe [(CR¹₂)ₐ-Si(OR)₃], in der a für eine ganze Zahl von 2 bis 10, bevorzugt 3 oder 4, insbesondere bevorzugt 3, steht, wobei R und R¹ jeweils die oben dafür angegebene Bedeutung haben.

Als Polymere, welche dem Polymerrest Y zugrunde liegen, sind im Sinne der vorliegenden Erfindung alle Polymere zu verstehen, bei denen mindestens 50%, bevorzugt mindestens 70%, besonders bevorzugt mindestens 90%, aller Bindungen in der Hauptkette Kohlenstoff-Kohlenstoff-, Kohlenstoff-Stickstoff- oder Kohlenstoff-Sauerstoff-Bindungen sind.

Beispiele für Polymerreste Y sind Polyester-, Polyether-, Polyurethan-, Polyalkylen- und Polyacrylatreste.

Bei Polymerrest Y handelt es sich vorzugsweise um organische Polymerreste, die als Polymerkette Polyoxyalkylene, wie Polyoxyethylen, Polyoxypropylen, Polyoxybutylen, Polyoxytetramethylen, Polyoxyethylen-Polyoxypropylen-Copolymer und Polyoxypropylen-Polyoxybutylen-Copolymer; Kohlenwasserstoffpolymere, wie Polyisobutylen und Copolymere von Polyisobutylen mit Isopren; Polychloroprene; Polyisoprene; Polyurethane; Polyester; Polyamide; Polyacrylate; Polymethacrylate; Vinylpolymer und Polycarbonate enthalten und die vorzugsweise über -O-C(=O)-NH-, -NH-C(=O)O-, -NH-C(=O)-NH-, -NR'-C(=O)-NH-, NH-C(=O)-NR'-,-NH-C(=O)-, -C(=O)-NH-, -C(=O)-O-, -O-C(=O)-, -O-C(=O)-O-, -S-C(=O)-NH-, -NH-C(=O)-S-, -C(=O)-S-, -S-C(=O)-, -S-C(=O)-S-, -C(=O)-, -S-, -O-, -NR'- an die Gruppe bzw. Gruppen -[(CR¹₂)ₐ-Si(OR)₃] gebunden sind, wobei R' gleich oder verschieden sein kann und eine für R angegebene Bedeutung hat oder für eine Gruppe -CH(COOR")-CH₂-COOR" steht, in der R" gleich oder verschieden sein kann und eine für R angegebene Bedeutung hat.

Bei Rest R' handelt es sich vorzugsweise um eine Gruppe -CH(COOR")-CH₂-COOR" oder einen gegebenenfalls substituierten Kohlenwasserstoffrest mit 1 bis 20 Kohlenstoffatomen, besonders bevorzugt um eine lineare, verzweigte oder cyclische Alkylgruppe mit 1 bis 20 Kohlenstoffatomen oder um eine gegebenenfalls mit Halogenatomen substituierte Arylgruppe mit 6 bis 20 Kohlenstoffatomen.

Beispiele für Reste R' sind Cyclohexyl-, Cyclopentyl-, n- und iso-Propyl-, n-, iso- und t-Butyl-, die diversen Stereoisomere des Pentylrests, Hexylrests oder Heptylrests sowie der Phenylrest.

Bei den Resten R" handelt es sich vorzugsweise um Alkylgruppen mit 1 bis 10 Kohlenstoffatomen, besonders bevorzugt um Methyl-, Ethyl- oder Propylreste.

Die Komponente (A) kann dabei die auf die beschriebene Weise angebundenen Gruppen -[(CR¹₂)ₐ-Si(OR)₃] an beliebigen Stellen im Polymer aufweisen, wie etwa kettenständig und/oder endständig.

Bevorzugt handelt es sich bei Rest Y um Polyurethanreste oder Polyoxyalkylenreste, besonders bevorzugt um kettenförmige Polyurethanreste oder kettenförmige Polyoxyalkylenreste mit jeweils 0 bis 3 Verzweigungsstellen mit endständig angebundenen Gruppen -[(CR¹₂)ₐ-Si(OR)₃], wobei als Verzweigungsstellen im Sinne der Erfindung alle Abzweigungen von der Hauptkette mit mehr als einem Kohlenstoffatom zu verstehen sind und die Reste und Indizes die oben genannten Bedeutungen haben.

Insbesondere handelt es sich bei Rest Y in Formel (I) um kettenförmige Polyurethanreste oder kettenförmige Polyoxyalkylenreste ohne Verzweigungsstellen mit endständig angebundenen Gruppen -[(CR¹₂)ₐ-Si(OR)₃], wobei die Reste und Indizes die oben genannten Bedeutungen haben.

Bei den Polyurethanresten Y handelt es sich bevorzugt um solche, deren Kettenenden über -NH-C(=O)O-, -NH-C(=O)-NH-, -NR'-C(=O)-NH- oder -NH-C(=O)-NR'-, insbesondere über -O-C(=O)-NH- oder -NH-C(=O)-NR'-, an die Gruppe bzw. Gruppen -[(CR¹₂)ₐ-Si(OR)₃] gebunden sind, wobei sämtliche Reste und Indizes eine der o.g. Bedeutungen haben. Die Polyurethanreste Y sind dabei vorzugsweise aus linearen oder verzweigten Polyoxyalkylenen, insbesondere aus Polypropylenglycolen, und Di- oder Polyisocyanaten herstellbar.

Bei den Polyoxyalkylenresten Y handelt es sich bevorzugt um lineare oder verzweigte Polyoxyalkylenreste, besonders bevorzugt um Polyoxypropylenreste, insbesondere bevorzugt um lineare Polyoxypropylenreste, deren Kettenenden vorzugsweise über -O-C(=O)-NH- an die Gruppe bzw. Gruppen -[(CR¹₂)ₐ-Si(OR)₃] gebunden sind, wobei die Reste und Indizes eine der oben genannten Bedeutungen haben. Vorzugsweise sind dabei mindestens 85%, besonders bevorzugt mindestens 90%, insbesondere mindestens 95%, aller Kettenenden über -O-C(=O)-NH- an die Gruppe -[(CR¹₂)ₐ-Si(OR)₃] gebunden.

Bei den Endgruppen der erfindungsgemäß eingesetzten Verbindungen (A) handelt es sich vorzugsweise um solche der allgemeinen Formeln

-NH-C(=O)-NR'-(CR¹₂)ₐ-Si(OR)₃ (Ia),

oder

-O-C(=O)-NH-(CR¹₂)ₐ-Si(OR)₃ (Ib),

wobei alle Reste und Indizes eine der oben dafür angegebenen Bedeutungen haben.

Sofern es sich bei den Verbindungen (A) um Polyurethane handelt, was bevorzugt ist, weisen diese vorzugsweise Endgruppen mit Propylenspacer der Formel

-NH-C(=O)-NR'-(CH₂)₃-Si(OCH₃)₃,

-NH-C(=O)-NR'-(CH₂)₃-Si(OC₂H₅)₃,

-O-C(=O)-NH-(CH₂)₃-Si(OCH₃)₃ oder

-O-C(=O)-NH-(CH₂)₃-Si(OC₂H₅)₃

in Kombination mit Endgruppen mit Methylenspacer der Formel

-NH-C(=O)-NR'-CH₂-Si(OCH₃)₃,

-NH-C(=O)-NR'-CH₂-Si(OC₂H₅)₃,

-O-C(=O)-NH-CH₂-Si(OCH₃)₃ oder

-O-C(=O)-NH-CH₂-Si(OC₂H₅)₃ auf,

wobei R' die oben genannte Bedeutung hat, mit der Maßgabe, dass in Komponente (A) 5 bis 60% aller Endgruppen Endgruppen mit Methylenspacer darstellen und mindestens 5% aller Verbindungen (A) pro Molekül mindestens eine Endgruppe mit Methylenspacer und mindestens eine Endgruppen mit Propylenspacer aufweisen.

Sofern es sich bei den Verbindungen (A) um Polyalkylenglycole, insbesondere Polypropylenglycole, handelt, was besonders bevorzugt ist, weisen diese vorzugsweise Endgruppen mit Propylenspacer der Formel

-O-C(=O)-NH-(CH₂)₃-Si(OC₂H₅)₃

oder

-O-C(=O)-NH-(CH₂)₃-Si(OCH₃)₃

in Kombination mit Endgruppen mit Methylenspacer der Formel

-O-C(=O)-NH-CH₂-Si(OCH₃)₃

oder

-O-C(=O)-NH-CH₂-Si((OC₂H₅)₃

auf, wobei die Kombination aus den Endgruppen

-O-C(=O)-NH-(CH₂)₃-Si(OCH₃)₃

und

-O-C(=O)-NH-CH₂-Si(OCH₃)₃

besonders bevorzugt wird,
mit der Maßgabe, dass in Komponente (A) 5 bis 60% aller Endgruppen Endgruppen mit Methylenspacer darstellen und mindestens 5% aller Verbindungen (A) pro Molekül mindestens eine Endgruppe mit Methylenspacer und mindestens eine Endgruppen mit Propylenspacer aufweisen.

Die mittleren Molekulargewichte Mₙ der Verbindungen (A) betragen vorzugsweise mindestens 400 g/mol, besonders bevorzugt mindestens 4 000 g/mol, insbesondere mindestens 10 000 g/mol, und vorzugsweise höchstens 30 000 g/mol, besonders bevorzugt höchstens 25 000 g/mol, insbesondere höchstens 19 000 g/mol.

Die zahlenmittlere Molmasse Mₙ wird dabei im Rahmen der vorliegenden Erfindung mittels Size Exclusion Chromatography (SEC) gegen Polystyrol-Standard, in THF, bei 60°C, Flow Rate 1,2 ml/min und Detektion mit RI (Brechungsindex-Detektor) auf einem Säulenset Styragel HR3-HR4-HR5-HR5 von Waters Corp. USA mit einem Injektionsvolumen von 100 µl bestimmt.

Die Viskosität der Verbindungen (A) beträgt vorzugsweise mindestens 0,2 Pas, bevorzugt mindestens 1 Pas, besonders bevorzugt mindestens 5 Pas, und vorzugsweise höchstens 700 Pas, bevorzugt höchstens 100 Pas, jeweils gemessen bei 20°C.

Die Viskosität von nicht pastösen Flüssigkeiten wird im Rahmen der vorliegenden Erfindung nach einer Temperierung auf 23°C mit einem DV 3 P-Rotationsviskosimeter von der Fa. A. Paar (Brookfieldsysteme) unter Verwendung von Spindel 6 bei 5 Hz entsprechend der ISO 2555 bestimmt.

Die Herstellung der erfindungsgemäß eingesetzten Verbindungen (A) kann durch bekannte Verfahren erfolgen, insbesondere durch Reaktionen zwischen isocyanatfunktionellen Verbindungen mit Verbindungen, die isocyanatreaktive Gruppen aufweisen.

Sofern es sich bei den Verbindungen (A) um silanterminierte Polyurethane handelt, was bevorzugt ist, kommen zwei jeweils bevorzugte Herstellverfahren in Frage.

Das erste bevorzugte Verfahren sieht eine Reaktion von isocyanatfunktionellen Polyurethanprepolymeren mit einer Kombination von mindestens zwei Aminosilanen vor, von denen mindestens eines der Formel (IV) und mindestens eines der Formel (V) entspricht

HNR'-(CR¹₂)ₐ-Si(OR)₃ (IV)

HNR'-CR¹₂-Si(OR)₃ (V),

wobei alle Variablen eine der oben genannten Bedeutungen aufweisen.

Die Komponenten (IV) und (V) werden dabei in einem Mengenverhältnis eingesetzt, dass eine erfindungsgemäße eingesetzte Komponente (A) erhalten wird, d.h., eine Komponente (A), die die in Anspruch 1 genannten Bedingungen für die Variable a erfüllt.

Dabei kann das isocyanatfunktionelle Polyurethanprepolymer sowohl mit einer Mischung der Silane (IV) und (V) umgesetzt werden, oder nacheinander zunächst mit einem dieser beiden Silane, wobei letzteres im Unterschuss eingesetzt wird und die verbleibenden Isocyanatgruppen dann mit dem jeweils zweiten Silan zur Reaktions gebracht werden.

Verfahren zur prinzipiellen Vorgehensweise zur Herstellung einer entsprechenden Komponente (A) sind unter anderem in EP 1 093 482 B1 (Absätze [0014]-[0023], [0039]-[0055] sowie Beispiel 1 und Vergleichsbeispiel 1) oder EP 2 785 755 B1 (Absätze [0052]-[0080] sowie Beispiele 1, 2, 7 und 8) beschrieben, die zum Offenbarungsgehalt der vorliegenden Anmeldung zu zählen sind. Allerdings müssen die dort beschriebenen Verfahren dahingegen modifiziert werden, dass bei der Silanterminierung der isocyanatfunktionellen Polyurethanprepolymere keine reinen Silane, sondern die o.g. Mischungen aus den Silanen (IV) und (V) eingesetzt werden.

Das zweite bevorzugte Verfahren zur Herstellung von einem erfindungsgemäß eingesetzten silanterminierten Polyurethan (A) sieht eine Reaktion von hydroxyfunktionellen Polyurethanprepolymeren mit einer Kombination von mindestens zwei isocyanatfunktionellen Silanen vor, von denen mindestens eines der Formel (VI) und mindestens eines der Formel (VII) entspricht

OCN-(CR¹₂)ₐ-Si(OR)₃ (VI)

OCN-CR¹₂-Si(OR)₃ (VII),

wobei alle Variablen eine der oben genannten Bedeutungen aufweisen.

Die Komponenten (VI) und (VII) werden dabei in einem Mengenverhältnis eingesetzt, dass eine erfindungsgemäß eingesetzte Komponente (A) erhalten wird, d.h., eine Komponente (A), die die in Anspruch 1 genannten Bedingungen für die Variable a erfüllt.

Dabei kann das hydroxyfunktionelle Polyurethanprepolymer sowohl mit einer Mischung der Silane (VI) und (VII) umgesetzt werden, oder nacheinander zunächst mit einem dieser beiden Silane, wobei letzteres im Unterschuss eingesetzt wird und die verbleibenden Hydroxygruppen dann mit dem jeweils zweiten Silan zur Reaktions gebracht werden.

Geeignete Verfahren zur Herstellung einer entsprechenden Komponente (A) sind unter anderem in EP 0 931 800 A (Absätze [0011]-[0022] sowie Beispiele 1-5) beschrieben, die zum Offenbarungsgehalt der vorliegenden Anmeldung zu zählen sind. Allerdings müssen die dort beschriebenen Verfahren dahingegen modifiziert werden, dass bei der Silanterminierung der hydroxyfunktionellen Polyurethanprepolymere keine reinen Silane, sondern die o.g. Mischungen aus den Silanen (VI) und (VII) eingesetzt werden.

Sofern es sich bei den Verbindungen (A) um silanterminierte Polypropylenglycole handelt, was besonders bevorzugt ist, werden diese vorzugsweise durch eine Reaktion von hydroxyfunktionellen Polypropylenglycolen mit einer Kombination von mindestens zwei isocyanatfunktionellen Silanen hergestellt, von denen mindestens eines der o.g. Formel (VI) und mindestens eines der Formel (VII) entspricht.

Die Komponenten (VI) und (VII) werden dabei in einem Mengenverhältnis eingesetzt werden, dass eine erfindungsgemäß eingesetzte Komponente (A) erhalten wird, d.h., eine Komponente (A), die die in Anspruch 1 genannten Bedingungen für die Variable a erfüllt.

Dabei kann das hydroxyfunktionelle Polypropylenglycol sowohl mit einer Mischung der Silane (VI) und (VII) umgesetzt werden, oder nacheinander zunächst mit einem dieser beiden Silane, wobei letzteres im Unterschuss eingesetzt wird und die verbleibenden Hydroxygruppen dann mit dem jeweils zweiten Silan zur Reaktions gebracht werden.

Geeignete Verfahren zur Herstellung einer entsprechenden Komponente (A) sind unter anderem in EP 1 535 940 B1 (Absätze [0005]-[0025] sowie Beispiele 1-3 und Vergleichsbeispiele 1-4) oder EP 1 896 523 B1 (Absätze [0008]-[0047]) beschrieben, die zum Offenbarungsgehalt der vorliegenden Anmeldung zu zählen sind. Allerdings müssen die dort beschriebenen Verfahren dahingegen modifiziert werden, dass bei der Silanterminierung der Polypropylenglycole keine reinen isocyanatofunktionellen Silane, sondern die o.g. Mischungen aus den Silanen (VI) und (VII) eingesetzt werden.

Vorzugsweise enthalten die erfindungsgemäßen feuchtigkeitshärtenden Zusammensetzungen (Z) Verbindungen (A) in Konzentrationen von mindestens 8 Gew.-%, besonders bevorzugt mindestens 15 Gew.-%. Vorzugsweise enthalten die erfindungsgemäßen vernetzbaren Zusammensetzungen (Z) Verbindungen (A) in Konzentrationen von höchstens 98 Gew.-%, besonders bevorzugt höchstens 95 Gew.-%, sofern die Zusammensetzungen (Z) keine Füllstoffe enthalten, und höchstens 50%, besonders bevorzugt höchstens 40 Gew.-%, sofern sie Füllstoffe enthalten.

Beispiele für Rest R² sind die für Rest R angegebenen Beispiele.

Bevorzugt handelt es sich bei Rest R² um einwertige Kohlenwasserstoffreste mit 1 bis 6 Kohlenstoffatomen, besonders bevorzugt um Alkylreste mit 1 oder 2 Kohlenstoffatomen, insbesondere um den Methylrest.

Beispiele für Rest R⁴ sind die für Rest R angegebenen Beispiele, sowie O-alkylcarbamatoalkyl-funktionelle Reste wie der O-Methylcarbamatopropyl- oder der O-Ethylcarbamatopropylrest, epoxy-funktionelle Reste wie der Glycidoxypropylrest, harnstofffunktionelle Reste wie der Ureapropylrest, Acryl- oder Methacryl-funktionelle Reste wie der 3-Methacryloxypropyl- oder der 3-Acryloxypropylrest.

Bevorzugt handelt es sich bei Rest R⁴ um Alkylreste mit 1 bis 8 Kohlenstoffatomen, Alkenylreste mit 1 bis 8 Kohlenstoffatomen oder aromatische Reste mit 1 bis 10 Kohlenstoffatomen, wobei der Methyl-, Ethyl-, Propyl-, Vinyl- oder der Phenylrest besonders bevorzugt werden, insbesondere der Vinyl- oder der Phenylrest.

Beispiele für Komponente (B) sind Tetraethoxysilan, Vinylsilane wie Vinyltrimethoxysilan, Vinyltriethoxysilan oder Vinylmethyldimethoxysilan, Arylsilane wie Phenyltrimethoxysilan, Phenyltriethoxysilan oder Phenylmethyldimethoxysilan, Alkylsilane wie Methyltrimethoxysilan, Dimethyldiethoxysilan, Dimethyldimethoxysilan, Ethyltrimethoxysilan, Ethyltriethoxysilan, Propyltrimethoxysilan, Propyltriethoxysilan, Propylmethyldimethoxysilan, n-Octyltrimethoxysilan, n-Octyltriethoxysilan, i-Octyltrimethoxysilan oder i-Octyltriethoxysilan, Carbamatosilane wie N-(3-Trimethoxysilylpropyl)-O-Methylcarbamat oder N-(3-Triethoxysilylpropyl)-O-Ethylcarbamat, Epoxysilane wie Glycidoxypropyltrimethoxysilane, Glycidoxypropyl-methyldimethoxysilan oder Glycidoxypropyltriethoxysilan, methacryl- oder acrylfunktionelle Silane wie 3-Methacryloxypropyl-trimethoxysilan, Methacryloxypropyl-triethoxysilan, 3-Acryloxypropyltrimethoxysilan oder Acryloxypropyl-triethoxysilan oder ureafunktionelle Silane wie N-(3-Trimethoxysilylpropyl)-harnstoff oder N-(3-Triethoxysilylpropyl)-harnstoff.

Bei der erfindungsgemäß eingesetzten Komponente (B) handelt es sich vorzugsweise um Tetraethoxysilan, Vinyltrialkoxysilane, Alkyltrialkoxysilane oder Aryltrialkoxysilane, wobei Methyl-, Ethyl-, Propyl-, Vinyl- oder Phenyltrimethoxysilane oder Methyl-, Ethyl-, Propyl-, Vinyl- oder Phenyltriethoxysilane besonders bevorzugt werden, insbesondere Vinyltrimethoxysilan oder Phenyltrimethoxysilan.

Die erfindungsgemäße Zusammensetzung (Z) enthält Silane (B) vorzugsweise in Mengen von mindestens 0,2 Gewichtsteilen, besonders bevorzugt in Mengen von mindestens 0,5 Gewichtsteilen, insbesondere bevorzugt in Mengen von mindestens 1 Gewichtsteilen, jeweils bezogen auf 100 Gewichtsteile Komponente (A).

Die erfindungsgemäße Zusammensetzung (Z) enthält Silane (B) vorzugsweise in Mengen von höchstens 30 Gewichtsteilen, besonders bevorzugt in Mengen von höchstens 20 Gewichtsteilen, insbesondere bevorzugt in Mengen von höchstens 15 Gewichtsteilen, jeweils bezogen auf 100 Gewichtsteile Komponente (A).

Beispiele für Rest R⁵ sind die für Rest R angegebenen Beispiele.

Bevorzugt handelt es sich bei Rest R⁵ um einwertige Kohlenwasserstoffreste mit 1 bis 6 Kohlenstoffatomen, insbesondere um Alkylreste mit 1 oder 2 Kohlenstoffatomen.

Beispiele für Rest R⁶ sind die für Rest R angegebenen Beispiele für gegebenenfalls substituierte Kohlenwasserstoffreste.

Bevorzugt handelt es sich bei Rest R⁶ um einwertige Kohlenwasserstoffreste mit 1 bis 6 Kohlenstoffatomen, insbesondere um den Methylrest.

Beispiele für die Reste R⁷ und R⁸ sind unabhängig voneinander die für Rest R angegebenen Beispiele mit 1 bis 6 Kohlenstoffatomen.

Bevorzugt handelt es sich den Resten R⁷ und R⁸ unabhängig voneinander um Wasserstoffatom oder um einwertige Kohlenwasserstoffreste mit 1 bis 6 Kohlenstoffatomen, insbesondere um Wasserstoffatom, Methyl-, Ethyl-, Propyl-, Butyl- oder Cyclohexylrest.

Beispiele für Komponente (C) sind α-funktionelle Carbamatosilane wie *N*-Trimethoxysilylmethyl-*O*-Methylcarbamat, *N*-Methyldimethoxysilylmethyl-*O*-Methylcarbamat, *N*-Triethoxysilylmethyl-*O*-Ethylcarbamat oder *N*-Methyldiethoxysilylmethyl-*O-*Ethylcarbamat, α-funktionelle Methacryl- oder Acrylsilane wie Methacryloxymethyl-trimethoxysilan, Methacryloxymethyl-methyldimethoxysilan, Methacryloxymethyl-triethoxysilan, Methacryloxymethyl-methyldiethoxysilan, Acryloxymethyl-trimethoxysilan, Acryloxymethyl-methyldimethoxysilane, Acryloxymethyltriethoxysilan und Acryloxymethyl-methyldiethoxysilan, α-funktionelle Carboxysilane wie Acetoxymethyltrimethoxysilan oder Acetoxymethyltriethoxysilan, oder α-funktionelle Aminosilane wie N-Butylaminomethyl-trimethoxysilan, N-Alkylaminomethyl-triethoxysilan, N-Alkylaminomethyl-methyldimethoxysilan oder N-Alkylaminomethyl-methyldiethoxysilan, wobei Alkyl typischerweise für einen linearen oder cyclischen Kohlenwasserstoffrest mit 1 bis 10 Kohlenstoffatomen steht.

Besonders typische Beispiele sind die oben genannten α-funktionellen Carbamatosilane, insbesondere das N-Trimethoxysilylmethyl-O-Methylcarbamat. Falls in den erfindungsgemäßen Zusammensetzungen (Z) eine Komponenten (C) anwesend ist, handelt es sich bei dieser vorzugsweise um ein carbamatfunktionelles Silan, das bei der Herstellung der Komponente (A) als Nebenprodukt entstehen kann, wenn bei dieser Herstellung ein isocyanatofunktionelles Silan der Formel (VII) im Überschuss eingesetzt und anschließend mit einem Alkohol abgefangen und zur Reaktion gebracht wird.

Die erfindungsgemäße Zusammensetzung (Z) enthält Silane (C) vorzugsweise in Mengen von höchstens 1,5 Gewichtsteilen, besonders bevorzugt in Mengen von höchstens 1 Gewichtsteil, jeweils bezogen auf 100 Gewichtsteile Komponente (A). Idealerweise enthält die erfindungsgemäße Zusammensetzung (Z) kein Silan (C), wobei dies technisch schwer zu realisieren ist.

Die Zusammensetzung (Z) kann bezogen auf 100 Gewichtsteile Komponente (A) geringe Mengen eines Silans (C) der Formel (III) enthalten, bei der X eine Gruppe -NR⁷-CO-OR⁸, R⁷ Wasserstoffatom und R⁸ einen einwertigen, gegebenenfalls substituierten Kohlenwasserstoffrest mit 1 bis 6 Kohlenstoffatomen darstellt, da dieses bei der Herstellung der Komponente (A) als Nebenprodukt entstehen kann, wenn das bei dieser Herstellung verwendete isocyanatofunktionelle Silan der Formel (VII) im Überschuss eingesetzt wird, um so eine möglichst vollständige und schnelle Umsetzung zu erreichen, und dieser Überschuss anschließend mit einem Alkohol R⁸OH abgefangen und zur Reaktion gebracht wird wie in EP 1 896 523 B1 (Absätze [0008]-[0047] sowie Anspruch 1) beschrieben.

In einer besonders bevorzugten Ausführung der Erfindung wird der Zusammensetzung (Z) kein Silan (C) zugegeben, zusätzlich zu dem oben genannten Silan der Formel (III), welches als Nebenprodukt bei der Herstellung der Komponente (A) aus einem Silan der Formel (VII) entstanden ist und in der Zusammensetzung (Z) mit maximal 2 Gewichtsteilen, bevorzugt maximal 1,5 Gewichtsteilen, besonders bevorzugt maximal 1 Gewichtsteil, jeweils bezogen auf 100 Gewichtsteile Komponente (A), enthalten ist.

Die erfindungsgemäßen Zusammensetzungen (Z) können zusätzlich zu den Komponenten (A) und (B) sowie gegebenenfalls (C) noch weitere Stoffe enthalten, die unterschiedlich sind zu den Komponenten (A), (B) und (C), wie z.B. (D) nicht direkt an Carbonylgruppen gebundene Stickstoffatome aufweisende Organosiliciumverbindungen, (E) Füllstoffe, (F) Siliconharze, (G) Katalysatoren, (H) nicht reaktive Weichmacher, (I) Additive und (J) Zuschlagstoffe.

Bei den in den erfindungsgemäßen Zusammensetzungen (Z) gegebenenfalls enthaltenen Organosiliciumverbindungen (D) handelt es sich bevorzugt um Organosiliciumverbindungen enthaltend Einheiten der Formel

D_{d}Si(OR⁹)ₑR¹⁰_{f}O_{(4-d-e-f)/2} (IX),

worin
- R⁹: gleich oder verschieden sein kann und Wasserstoffatom oder gegebenenfalls substituierte Kohlenwasserstoffreste bedeutet,
- D: gleich oder verschieden sein kann und einwertige, SiCgebundene, Stickstoffatome, die nicht direkt an eine Carbonylgruppe gebunden sind, aufweisende Reste bedeutet, in dem weder Stickstoff noch ein sonstiges Heteroatom nur durch ein einziges Kohlenstoffatom von der Silylgruppe getrennt ist,
- R¹⁰: gleich oder verschieden sein kann und einen Alkylrest oder einen Phenylrest bedeutet,
- d: 0, 1, 2 oder 3, bevorzugt 1, ist,
- e: 0, 1, 2 oder 3, bevorzugt 1, 2 oder 3, besonders bevorzugt 2 oder 3, ist und
- f: 0, 1, 2 oder 3, bevorzugt 1 oder 0, ist,
- mit: der Maßgabe, dass die Summe aus d+e+f kleiner oder gleich
- 4: ist und pro Molekül mindestens ein Rest D anwesend ist.

Bei den erfindungsgemäß eingesetzten Organosiliciumverbindungen (D) kann es sich sowohl um Silane handeln, d.h. Verbindungen der Formel (IX) mit d+e+f=4, als auch um Siloxane, d.h. Verbindungen enthaltend Einheiten der Formel (IX) mit d+e+f ≤ 3, wobei es sich bevorzugt um Silane handelt.

Beispiele für Reste R⁹ sind die für Rest R angegebenen Beispiele.

Bei den Resten R⁹ handelt es sich vorzugsweise um Wasserstoffatom oder gegebenenfalls mit Halogenatomen substituierte Kohlenwasserstoffreste mit 1 bis 18 Kohlenstoffatomen, besonders bevorzugt um Wasserstoffatom oder Kohlenwasserstoffreste mit 1 bis 10 Kohlenstoffatomen, insbesondere um Methyl- oder Ethylrest.

Beispiele für Rest R¹⁰ sind die für R angegebenen Beispiele für Alkylreste, wobei es sich vorzugsweise um den Methylrest handelt.

Beispiele für Reste D sind Reste der Formeln H₂N(CH₂)₃-, H₂N(CH₂)₂NH(CH₂)₃-, H₂N(CH₂)₂NH(CH₂)₂NH(CH₂)₃-, H₃CNH(CH₂)₃-, C₂H₅NH(CH₂)₃-, C₃H₇NH(CH₂)₃-, C₄H₉NH(CH₂)₃-, C₅H₁₁NH(CH₂)₃-, C₆H₁₃NH(CH₂)₃-, C₇H₁₅NH(CH₂)₃-, H₂N(CH₂)₄-, H₂N-CH₂-CH(CH₃)-CH₂-, H₂N(CH₂)₅-, cyclo-C₅H₉NH(CH₂)₃-, cyclo-C₆H₁₁NH(CH₂)₃-, Phenyl-NH (CH₂)₃-, (CH₃)₂N (CH₂)₃-, (C₂H₅)₂N(CH₂)₃-, (C₃H₇)₂N(CH₂)₃-, (C₄H₉)₂N(CH₂)₃-, (C₅H₁₁)₂N(CH₂)₃-, (C₆H₁₃)₂N(CH₂)₃-, (C₇H₁₅)₂N(CH₂)₃-, (CH₃O)₃Si(CH₂)₃NH(CH₂)₃-, (C₂H₅O)₃Si(CH₂)₃NH(CH₂)₃-, (CH₃O)₂(CH₃)Si(CH₂)₃NH(CH₂)₃- und (C₂H₅O)₂(CH₃)Si(CH₂)₃NH(CH₂)₃-sowie Umsetzungsprodukte der obengenannten primären Aminogruppen mit Verbindungen, die gegenüber primären Aminogruppen reaktive Doppelbindungen oder Epoxidgruppen enthalten.

Bevorzugt handelt es sich bei Rest D um den H₂N(CH₂)₃-, H₂N(CH₂)₂NH(CH₂)₃- oder cyclo-C₆H₁₁NH(CH₂)₃-Rest.

Beispiele für die erfindungsgemäß gegebenenfalls eingesetzten Silane der Formel (IX) sind H₂N(CH₂)₃-Si(OCH₃)₃, H₂N(CH₂)₃-Si(OC₂H₅)₃, H₂N(CH₂)₃-Si(OCH₃)₂CH₃, H₂N(CH₂)₃-Si(OC₂H₅)₂CH₃, H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, H₂N(CH₂)₂NH(CH₂)₃-Si(OC₂H₅)₂CH₃, H₂N(CH₂)₂NH(CH₂)₂NH(CH₂)₃-Si(OCH₃)₃,H₂N(CH₂)₂NH(CH₂)₂NH(CH₂)₃-Si(OC₂H₅)₃, cyclo-C₆H₁₁NH(CH₂)₃-Si(OCH₃)₃, cyclo-C₆H₁₁NH(CH₂)₃-Si(OC₂H₅)₃, cyclo-C₆H₁₁NH(CH₂)₃-Si(OCH₃)₂CH₃, cyclo-C₆H₁₁NH(CH₂)₃-Si(OC₂H₅)₂CH₃, Phenyl-NH(CH₂)₃-Si(OCH₃)₃, Phenyl-NH(CH₂)₃-Si(OC₂H₅)₃, Phenyl-NH(CH₂)₃-Si(OCH₃)₂CH₃, Phenyl-NH(CH₂)₃-Si(OC₂H₅)₂CH₃, HN((CH₂)₃-Si(OCH₃)₃)₂, HN((CH₂)₃-Si(OC₂H₅)₃)₂, HN((CH₂)₃-Si(OCH₃)₂CH₃)₂ und HN((CH₂)₃-Si(OC₂H₅)₂CH₃)₂ sowie auch deren Teilhydrolysate, wobei H₂N(CH₂)₃-Si(OCH₃)₃, H₂N(CH₂)₃-Si(OC₂H₅)₃, H₂N(CH₂)₃-Si(OCH₃)₂CH₃, H₂N(CH₂)₃-Si(OC₂H₅)₂CH₃, H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, cyclo-C₆H₁₁NH(CH₂)₃-Si(OCH₃)₃, cyclo-C₆H₁₁NH(CH₂)₃-Si(OC₂H₅)₃ oder cyclo-C₆H₁₁NH(CH₂)₃-Si(OCH₃)₂CH₃ und/oder jeweils deren Teilhydrolysate bevorzugt und H₂N(CH₂)₃-Si(OCH₃)₃, H₂N(CH₂)₃-Si(OC₂H₅)₃, H₂N(CH₂)₃-Si(OCH₃)₂CH₃, H₂N(CH₂)₃-Si(OC₂H₅)₂CH₃, H₂N(CH₂)₂NH(CH₂)₃-Si(OCH₃)₃, H₂N(CH₂)₂NH(CH₂)₃-Si(OCH₃)₂CH₃, cyclo-C₆H₁₁NH(CH₂)₃-Si(OCH₃)₃ oder cyclo-C₆H₁₁NH(CH₂)₃-Si(OCH₃)₂CH₃ und/oder jeweils deren Teilhydrolysate besonders bevorzugt sind.

Die erfindungsgemäß gegebenenfalls eingesetzten Organosiliciumverbindungen (D) können in den erfindungsgemäßen Zusammensetzungen (Z) auch die Funktion eines Härtungskatalysators oder -cokatalysators übernehmen.

Des Weiteren können die erfindungsgemäß gegebenenfalls eingesetzten Organosiliciumverbindungen (D) als Haftvermittler und/oder als Wasserfänger wirken.

Die erfindungsgemäß gegebenenfalls eingesetzten Organosiliciumverbindungen (D) sind handelsübliche Produkte bzw. nach in der Chemie gängigen Verfahren herstellbar.

Falls die erfindungsgemäßen Zusammensetzungen (Z) Komponente (D) enthalten, handelt es sich um Mengen von bevorzugt 0,01 bis 25 Gewichtsteilen, besonders bevorzugt 0,1 bis 10 Gewichtsteilen, insbesondere 0,5 bis 5 Gewichtsteilen, jeweils bezogen auf 100 Gewichtsteile Komponente (A). Die erfindungsgemäßen Zusammensetzungen (Z) enthalten bevorzugt Komponente (D).

Bei den in den erfindungsgemäßen Zusammensetzungen (Z) gegebenenfalls eingesetzten Füllstoffen (E) kann es sich um beliebige, bisher bekannte Füllstoffe handeln.

Beispiele für Füllstoffe (E) sind nicht verstärkende Füllstoffe, also Füllstoffe mit einer BET-Oberfläche von vorzugsweise bis zu 50 m²/g, wie Quarz, Diatomeenerde, Calciumsilikat, Zirkoniumsilikat, Talkum, Kaolin, Zeolithe, Metalloxidpulver, wie Aluminium-, Titan-, Eisen- oder Zinkoxide bzw. deren Mischoxide, Bariumsulfat, gefällter und/oder gemahlener Kreide, die sowohl beschichtet als auch unbeschichtet sein kann, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, gefällte Kreide, Ruß, wie Furnace- und Acetylenruß und Silicium-Aluminium-Mischoxide großer BET-Oberfläche; Aluminiumtrihydroxid, hohlkugelförmige Füllstoffe, wie keramische Mikrokugel, wie z.B. solche erhältlich unter der Handelsbezeichnung Zeeospheres^{™} bei der 3M Deutschland GmbH in D-Neuss, elastische Kunststoffkugeln, wie etwa solche erhältlich unter der Handelsbezeichnung EXPANCEL^{®} bei der Fa. AKZO NOBEL, Expancel in Sundsvall, Schweden, oder Glaskugeln; faserförmige Füllstoffe, wie Asbest sowie Kunststofffasern. Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen.

Bevorzugt handelt es sich bei den gegebenenfalls eingesetzten Füllstoffen (E) um gemahlene und/oder gefällte Kreide, die sowohl beschichtet als auch unbeschichtet sein kann, Talkum, Aluminiumtrihydroxid sowie Kieselsäure, wobei Calciumcarbonat und Aluminiumtrihydroxid besonders bevorzugt werden. Bevorzugte Calciumcarbonat-Typen sind gemahlen oder gefällt und gegebenenfalls oberflächenbehandelt mit Fettsäuren wie Stearinsäure oder deren Salze. Bei der bevorzugten Kieselsäure handelt es sich bevorzugt um pyrogene Kieselsäure.

Gegebenenfalls eingesetzte Füllstoffe (E) haben einen Feuchtigkeitsgehalt von bevorzugt unter 1 Gew.-%, besonders bevorzugt von unter 0,5 Gew.-%.

Falls die erfindungsgemäßen Zusammensetzungen (Z) Füllstoffe (E) enthalten, handelt es sich um Mengen von vorzugsweise 10 bis 1000 Gewichtsteilen, besonders bevorzugt 50 bis 500 Gewichtsteilen, insbesondere 70 bis 200 Gewichtsteilen, jeweils bezogen auf 100 Gewichtsteile Bestandteil (A). Die erfindungsgemäßen Zusammensetzungen (Z) enthalten bevorzugt Füllstoffe (E).

In einer besonderen Ausführung der Erfindung enthalten die erfindungsgemäßen Zusammensetzungen (Z) als Füllstoffe (E) Calciumcarbonat, Aluminiumtrihydroxid und/oder Talkum oder aber eine Kombination aus
a) Kieselsäure, insbesondere pyrogene Kieselsäure, und
b) Calciumcarbonat, Aluminiumtrihydroxid und/oder Talkum.

In einer weiteren besonderen Ausführung der Erfindung enthalten die erfindungsgemäßen Zusammensetzungen (Z) als Füllstoffe (E) eine Kombination aus
a) gefällter Kreide und
b) gemahlener Kreide.

Bei den in den erfindungsgemäßen Zusammensetzungen (Z) gegebenenfalls eingesetzten Siliconharzen (F) handelt es sich vorzugsweise um Phenylsiliconharze.

Beispiele für als Komponenten (F) einsetzbare Phenylsiliconharze sind handelsübliche Produkte, z.B. verschiedene SILRES^{®}-Typen der Wacker Chemie AG, wie SILRES^{®} IC 368, SILRES^{®} IC 678 oder SILRES^{®} IC 231 oder SILRES^{®} SY231. Geeignete Siliconharze sind in der Beschreibung sowie den Beispielen von WO2015/158624 im Detail beschrieben. Die Abschnitte von WO2015/158624, die sich mit der Beschreibung von Siliconharzen befassen, sind daher zum Offenbarungsgehalt dieser Beschreibung zu rechnen.

Falls die erfindungsgemäßen Zusammensetzungen (Z) Harze (F) enthalten, handelt es sich um Mengen von mindestens 5 Gewichtsteilen, besonders bevorzugt mindestens 10 Gewichtsteilen, insbesondere mindestens 50 Gewichtsteilen, und vorzugsweise höchstens 1000 Gewichtsteilen, besonders bevorzugt höchstens 500 Gewichtsteilen, insbesondere höchstens 300 Gewichtsteilen, jeweils bezogen auf 100 Gewichtsteile der Komponente (A).

Bei den in den erfindungsgemäßen Zusammensetzungen (Z) gegebenenfalls eingesetzten Katalysatoren (G) kann es sich um beliebige, von Komponente (D) verschiedene, bisher bekannte Katalysatoren für durch Silankondensation härtende Massen handeln.

Beispiele für metallhaltige Härtungskatalysatoren (G) sind organische Titan- und Zinnverbindungen, beispielsweise Titansäureester, wie Tetrabutyltitanat, Tetrapropyltitanat, Tetraisopropyltitanat und Titantetraacetylacetonat; Zinnverbindungen, wie Dibutylzinndilaurat, Dibutylzinnmaleat, Dibutylzinndiacetat, Dibutylzinndioctanoat, Dibutylzinnacetylacetonat, Dibutylzinnoxide, und entsprechende Dioctylzinnverbindungen.

Beispiele für metallfreie Härtungskatalysatoren (G) sind basische Verbindungen, wie Triethylamin, Tributylamin, 1,4-Diazabicyclo[2,2,2]octan, 1,5-Diazabicyclo[4.3.0]non-5-en, 1,8-Diazabicyclo[5.4.0]undec-7-en, N,N-Bis-(N,N-dimethyl-2-aminoethyl)-methylamin, Pentamethylguanidin, Tetramethylguanidin sowie weitere Guanidinderivate, N,N-Dimethylcyclohexylamin, N,N-Dimethylphenylamin und N-Ethylmorpholinin.

Ebenfalls als Katalysator (G) können saure Verbindungen eingesetzt werden, wie beispielsweise Phosphorsäure und ihre Ester, Toluolsulfonsäure, Schwefelsäure, Salpetersäure oder auch organische Carbonsäuren, z.B. Essigsäure und Benzoesäure.

In einer bevorzugten Ausführung der Erfindung enthalten die erfindungsgemäßen Zusammensetzungen (Z) weniger als 0,5 Gew.-%, besonders bevorzugt weniger als 0,2 Gew.-% insbesondere weniger als 0,05 Gew.-% zinnhaltige Katalysatoren (G), jeweils bezogen auf die gesamte Masse der Zusammensetzung (Z).

In einer besonders bevorzugten Ausführung der Erfindung sind die erfindungsgemäßen Zusammensetzungen (Z) frei von zinnhaltigen Katalysatoren.

In einer insbesondere bevorzugten Ausführung der Erfindung sind die erfindungsgemäßen Zusammensetzungen (Z) frei von metallhaltigen Katalysatoren.

Falls die erfindungsgemäßen Zusammensetzungen (Z) Katalysatoren (G) enthalten, handelt es sich um Mengen von vorzugsweise 0,01 bis 20 Gewichtsteilen, besonders bevorzugt 0,05 bis 5 Gewichtsteilen, jeweils bezogen auf 100 Gewichtsteile Bestandteil (A). Die erfindungsgemäßen Zusammensetzungen (Z) enthalten bevorzugt keine Katalysatoren (G).

Bei den in den erfindungsgemäßen Zusammensetzungen (Z) gegebenenfalls eingesetzten nicht reaktiven Weichmachern (H) kann es sich um beliebige, bisher bekannte, für silanvernetzende Systeme typische Weichmacher handeln.

Beispiele für nicht reaktive Weichmacher (H) sind Phthalsäureester (z.B. Dioctylphthalat, Diisooctylphthalat und Diundecylphthalat), perhydrierte Phthalsäureester (z.B. 1,2-Cyclohexandicarbonsäurediisononylester und 1,2-Cyclohexandicarbonsäuredioctylester) Adipinsäureester (z.B. Dioctyladipat), Benzoesäureester, Glycolester, Ester gesättigter Alkandiole (z.B. 2,2,4-Trimethyl-1,3-pentandiolmonoisobutyrate und 2,2,4-Trimethyl-1,3-pentandioldiisobutyrate), Phosphorsäureester, Sulfonsäureester, Polyester, Polyether (z.B. Polyethylenglycole und Polypropylenglycole mit Molmassen Mₙ von vorzugsweise 400 bis 10 000 g/mol), Polystyrole, Polybutadiene, Polyisobutylene, paraffinische Kohlenwasserstoffe und hochmolekulare, verzweigte Kohlenwasserstoffe.

Falls die erfindungsgemäßen Zusammensetzungen (Z) nicht reaktive Weichmacher (H) enthalten, handelt es sich um Mengen von vorzugsweise 0,01 bis 100 Gewichtsteilen, bezogen auf 100 Gewichtsteile Komponente (A).

In einer besonders vorteilhaften Ausführung der Erfindung enthalten die erfindungsgemäßen Zusammensetzungen (Z) nicht reaktive Weichmacher (H).

Bei den in den erfindungsgemäßen Zusammensetzungen (Z) gegebenenfalls eingesetzten Additiven (I) kann es sich um beliebige, bisher bekannte, für silanvernetzende Systeme typische Additive handeln.

Bei den erfindungsgemäß gegebenenfalls eingesetzten Additiven (I) handelt es sich bevorzugt um Antioxidantien, UV-Stabilisatoren, wie z.B. sog. HALS-Verbindungen, Fungizide oder Pigmente.

Falls die erfindungsgemäßen Zusammensetzungen (Z) Additive (I) enthalten, handelt es sich um Mengen von vorzugsweise 0,01 bis 30 Gewichtsteilen, besonders bevorzugt 0,1 bis 10 Gewichtsteilen, jeweils bezogen auf 100 Gewichtsteile Komponente (A). Die erfindungsgemäßen Zusammensetzungen (Z) enthalten bevorzugt Additive (I), insbesondere UV-Stabilisatoren und/oder HALS-Verbindungen.

Bei den erfindungsgemäß gegebenenfalls eingesetzten Zuschlagsstoffen (J) handelt es sich bevorzugt um Rheologieadditive, Flammschutzmittel oder organische Lösungsmittel.

Bei den Rheologieadditiven (J) handelt es sich bevorzugt um Polyamidwachse, hydrierte Rizinusöle oder Stearate.

Beispiele für organische Lösungsmittel (J) sind niedermolekulare Ether, Ester, Ketone, aromatische und aliphatische sowie gegebenenfalls halogenhaltige Kohlenwasserstoffe oder Alkohole, wobei letztere bevorzugt werden.

Den erfindungsgemäßen Zusammensetzungen (Z) werden vorzugsweise keine organischen Lösungsmittel (J) zugesetzt.

Falls die erfindungsgemäßen Zusammensetzungen (Z) eine oder mehrere Komponenten (J) enthalten, handelt es sich jeweils um Mengen von bevorzugt 0,5 bis 200 Gewichtsteilen, besonders bevorzugt 1 bis 100 Gewichtsteilen, insbesondere 2 bis 70 Gewichtsteilen, jeweils bezogen auf 100 Gewichtsteile Komponente (A) .

Bevorzugt handelt es sich bei den erfindungsgemäßen Zusammensetzungen (Z) um solche enthaltend
(A) 100 Gewichtsteile Polymere der Formel (I),
(B) 0,2 bis 30 Gewichtsteile Silane ausgewählt aus Tetraethoxysilan und Silanen der Formel (II),
(C) maximal 2 Gewichtsteile Silane der Formel (III),
(D) 0,01 bis 25 Gewichtsteile Organosiliciumverbindungen enthaltend Einheiten der Formel (IX),

gegebenenfalls (E) Füllstoffe,
gegebenenfalls (F) Siliconharze,
gegebenenfalls (G) Katalysatoren,
gegebenenfalls (H) nicht reaktive Weichmacher,
gegebenenfalls (I) Additive und
gegebenenfalls (J) Zuschlagstoffe.

Bei den erfindungsgemäßen Zusammensetzungen (Z) handelt es sich besonders bevorzugt um solche enthaltend
(A) 100 Gewichtsteile Polymere der Formel (I),
(B) 0,2 bis 30 Gewichtsteile Silane ausgewählt aus Tetraethoxysilan und Silanen der Formel (II),
(C) maximal 1,5 Gewichtsteile Silane der Formel (III),
(D) 0,1 bis 10 Gewichtsteile Organosiliciumverbindungen enthaltend Einheiten der Formel (IX),

gegebenenfalls (E) Füllstoffe,
gegebenenfalls (F) Siliconharze,
gegebenenfalls (G) Katalysatoren, wobei die Zusammensetzungen (Z) weniger als 0,05 Gew.-% Zinnkatalysatoren enthält, bezogen auf die gesamte Masse der Zusammensetzungen (Z),
gegebenenfalls (H) nicht reaktive Weichmacher,
gegebenenfalls (I) Additive und
gegebenenfalls (J) Zuschlagstoffe.

Insbesondere bevorzugt handelt es sich bei den erfindungsgemäßen Zusammensetzungen (Z) um solche enthaltend
(A) 100 Gewichtsteile Polymere der Formel (I),
(B) 0,2 bis 30 Gewichtsteile Silane der Formel (II),
(C) maximal 1,5 Gewichtsteile Silane der Formel (III),
(D) 0,1 bis 10 Gewichtsteile Organosiliciumverbindungen enthaltend Einheiten der Formel (IX),
(E) 10 bis 1000 Gewichtsteile Füllstoffe,
gegebenenfalls (F) Siliconharze,
gegebenenfalls (G) Katalysatoren, wobei die Zusammensetzungen (Z) weniger als 0,05 Gew.-% Zinnkatalysatoren enthält, bezogen auf die gesamte Masse der Zusammensetzungen (Z),
gegebenenfalls (H) nicht reaktive Weichmacher,
gegebenenfalls (I) Additive und
gegebenenfalls (J) Zuschlagstoffe.

Die erfindungsgemäßen Zusammensetzungen (Z) enthalten außer den Komponenten (A) bis (J) vorzugsweise keine weiteren Bestandteile.

Bei den erfindungsgemäß eingesetzten Komponenten kann es sich jeweils um eine Art einer solchen Komponente wie auch um ein Gemisch aus mindestens zwei Arten einer jeweiligen Komponente handeln.

Bei den erfindungsgemäßen Zusammensetzungen (Z) handelt es sich bevorzugt um Formulierungen mit Viskositäten von bevorzugt 500 bis 1 000 000 mPas, besonders bevorzugt von 1 000 bis 500 000 mPas, insbesondere 5 000 bis 100 000 mPas, jeweils bei 25°C.

Bei den erfindungsgemäßen Zusammensetzungen (Z) handelt es sich bevorzugt um flüssige oder pastöse Massen.

Die erfindungsgemäßen Zusammensetzungen (Z) sind feuchtigkeitshärtend, d.h. sie sind bei Abwesenheit von Wasser lagerstabil und härten bei Kontakt mit Wasser und/oder Luftfeuchtigkeit aus.

Die Herstellung der erfindungsgemäßen Zusammensetzungen (Z) kann nach beliebiger und an sich bekannter Art und Weise erfolgen, wie etwa nach Methoden und Mischverfahren, wie sie zur Herstellung von feuchtigkeitshärtenden Zusammensetzungen üblich sind.

Ein weiterer Gegenstand der vorliegenden Erfindung ist ein Verfahren zur Herstellung der erfindungsgemäßen Zusammensetzungen (Z) durch Mischen der einzelnen Komponenten in beliebiger Reihenfolge.

Dabei werden bevorzugt die gegebenenfalls eingesetzten katalytisch wirksamen Komponenten (D) und/oder (G) erst am Ende des Mischvorganges zugesetzt.

Dieses Vermischen kann bei Temperaturen zwischen 0 und 30°C und dem Druck der umgebenden Atmosphäre, also etwa 900 bis 1100 hPa, erfolgen. Falls erwünscht, kann dieses Vermischen aber auch bei höheren Temperaturen erfolgen, z.B. bei Temperaturen im Bereich von 30 bis 130°C. Weiterhin ist es möglich, zeitweilig oder ständig unter vermindertem Druck zu mischen, wie z.B. bei 30 bis 500 hPa Absolutdruck, um flüchtige Verbindungen und/oder Luft zu entfernen.

Das erfindungsgemäße Vermischen erfolgt bevorzugt unter Ausschluss von Feuchtigkeit.

Das erfindungsgemäße Verfahren kann kontinuierlich oder diskontinuierlich durchgeführt werden.

Bei den erfindungsgemäßen Zusammensetzungen (Z) handelt es sich bevorzugt um einkomponentige, unter Ausschluss von Wasser lagerfähige, bei Zutritt von Wasser bei Raumtemperatur vernetzbare Massen. Die erfindungsgemäßen Zusammensetzungen (Z) können aber auch Teil von zweikomponentigen Vernetzungssystemen sein, bei denen in einer zweiten Komponente OH-haltige Verbindungen, wie Wasser, hinzugefügt werden.

Für die Vernetzung der erfindungsgemäßen Zusammensetzungen (Z) reicht der übliche Wassergehalt der Luft aus. Die Vernetzung der erfindungsgemäßen Zusammensetzungen (Z) erfolgt vorzugsweise bei Raumtemperatur. Sie kann, falls erwünscht, auch bei höheren oder niedrigeren Temperaturen als Raumtemperatur, z.B. bei -5° bis 15°C oder bei 30° bis 50°C und/oder mittels des normalen Wassergehaltes der Luft übersteigenden Konzentrationen von Wasser durchgeführt werden.

Vorzugsweise wird die Vernetzung bei einem Druck von 100 bis 1100 hPa, insbesondere beim Druck der umgebenden Atmosphäre, also etwa 900 bis 1100 hPa, durchgeführt.

Die erfindungsgemäßen Zusammensetzungen (Z) können für alle Zwecke eingesetzt werden, für die auch bisher vernetzbare Zusammensetzungen auf der Basis von Organosiliciumverbindungen eingesetzt worden sind, bevorzugt als Kleb- oder Dichtstoffe, besonders bevorzugt als Dichtstoffe, insbesondere als Dichtmassen für Fugen.

Bei der Verwendung der Zusammensetzungen (Z) als Dichtmassen für Fugen können die abzudichtenden Fugen aus den unterschiedlichsten Materialen bestehen, z.B. aus Stein, Beton, mineralische Untergründe, Metalle, Glas, Keramik, Holz und lackierte Oberflächen, aber auch Kunststoffe inkl. PVC. Dabei können die Flanken der Fuge sowohl aus gleichen als auch aus unterschiedlichen Materialen bestehen.

Ein weiterer Gegenstand der Erfindung sind Formkörper hergestellt durch Vernetzung der erfindungsgemäßen bzw. erfindungsgemäß hergestellten Zusammensetzungen (Z).

In einer bevorzugten Ausführung weisen die erfindungsgemäßen Formkörper ein 100%-Modul von vorzugsweise 0,1-1,4 MPas, besonders bevorzugt von 0,15-0,5 MPas, Reißdehnungen von vorzugsweise mindestens 200%, besonders bevorzugt von mindestens 400%, und eine Rückstellung von vorzugsweise bei mindestens 70% auf.

Bei den erfindungsgemäßen Formkörpern kann es sich um beliebige Formkörper handeln, wie etwa Dichtungen, Pressartikel, extrudierte Profile, Beschichtungen, Imprägnierungen, Verguss, Linsen, Prismen, polygone Strukturen, Laminat- oder Klebschichten.

Ein weiterer Gegenstand der Erfindung ist ein Verfahren zur Verklebung von Substraten, bei denen die erfindungsgemäße Zusammensetzung (Z) auf die Oberfläche mindestens eines Substrates aufgebracht, diese Oberfläche dann mit dem zu verklebenden zweiten Substrat in Kontakt gebracht und anschließend vernetzen gelassen wird.

Beispiele für Substrate, die erfindungsgemäß verklebt werden können, sind Beton, mineralische Untergründe, Metalle, Glas, Keramik und lackierte Oberflächen, Holz aber auch Kunststoffe inkl. PVC. Dabei können sowohl gleiche als auch unterschiedliche Materialen miteinander verklebt werden. Eine bevorzugte Anwendung stellt die Verklebung von Parkett auf üblichen Untergründen wie Estrich oder Beton dar.

Ein weiterer Gegenstand der Erfindung ist ein Verfahren zur Herstellung von Materialverbunden, bei denen die erfindungsgemäße Zusammensetzung (Z) auf mindestens ein Substrat aufgebracht und anschließend vernetzen gelassen wird. Beispiele hierfür sind Beschichtungen, Verguss, z.B. Vergussmassen für LEDs oder sonstige elektronische Bauteile.

Die erfindungsgemäßen Zusammensetzungen (Z) besitzen den Vorteil, dass sie leicht herstellbar sind.

Des Weiteren haben die erfindungsgemäßen Zusammensetzungen (Z) den Vorteil, dass damit zinnfrei vernetzbare Dichtstoffe mit hervorragenden Eigenschaften hergestellt werden können.

Die erfindungsgemäßen Zusammensetzungen (Z) haben den Vorteil, dass sie sich durch eine sehr hohe Lagerstabilität und eine auch in Abwesenheit von Zinnkatalysatoren hohe oder sogar sehr hohe Vernetzungsgeschwindigkeit auszeichnen.

Ferner haben die erfindungsgemäßen Zusammensetzungen (Z) den Vorteil, dass sie ein ausgezeichnetes Haftungsprofil aufweisen.

Des Weiteren haben die erfindungsgemäßen vernetzbaren Zusammensetzungen (Z) den Vorteil, dass sie leicht zu verarbeiten sind.

Des Weiteren haben die erfindungsgemäßen vernetzbaren Zusammensetzungen (Z) den Vorteil, dass daraus zinnfreie Formkörper, insbesondere zinnfreie Dichtstoffe, mit niedrigem Modul und guten Rückstellungen erhalten werden können.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des Weiteren beziehen sich alle Angaben von Teilen und Prozentsätzen, soweit nichts anderes angegeben ist, auf das Gewicht.

### Beispiele

### Beispiel 1: Herstellung von Isocyanatomethyl-trimethoxysilan

Die Herstellung des Isocyanatomethyl-trimethoxysilans erfolgt in einem Dünnschichtverdampfer mit einer Länge von 25 cm, einem Innendurchmesser von 8 cm, und einer Wandtemperatur von 300 °C.

400 g *N*-Trimethoxysilylmethyl-O-Methylcarbamat (käuflich erhältlich unter der GENIOSIL^{®} XL 63 bei der Wacker Chemie AG, D-München) werden mit 0,28 g Dioctylzinndilaurat versetzt. Die Dosierung erfolgt mit einer Geschwindigkeit von 110 ml/h am oberen Ende des Dünnschichtverdampfers. Von unten nach oben, d.h. gegen die Laufrichtung der Reaktionsmischung, wird ein Sickstoffstrom von 65 l/h geleitet. Unter diesen Bedingungen beträgt der Sumpfablauf lediglich ca. 10% der zudosierten Silanmenge.

Die verdampfte Produktmischung wird zusammen mit dem Stickstoffstrom über eine 10 cm lange und mittels eines Vakuummantels isolierte Vigreuxkolonne geleitet, wobei der flüssige Kolonnenrücklauf zurück in den Dünnschichtverdampfer geführt wird. Die Kopftemperatur der Vigreuxkolonne liegt bei 158-164 °C. Aus diesem Gasstrom wird die thermolysierte Silanmischung mittels eines herkömmlichen Glaskühlers bei einer Temperatur von 54 °C selektiv kondensiert. In einem zweiten Kondensationsschritt wird anschließend das Methanol bei einer Temperatur von 0 °C auskondensiert, ehe der Stickstoffstrom durch eine Kühlfalle in die Luftabsaugung des Laborabzuges geleitet wird, in dem sich die gesamte Anlage befindet. Die erhaltene Silanmischung wird bei -20 °C gelagert.

Das Verfahren wird zwei weitere Male exakt wiederholt und die beiden dabei erhaltenen kondensierten Silanmischungen werden vereint. Insgesamt werden 988 g kondensierte Silanmischung erhalten. Die farblose Flüssigkeit wird mittels ¹H-NMR und gaschromatographisch analysiert. Sie enthält 31,8% Isocyanatomethyl-trimethoxysilan, 67,9% *N*-Trimethoxysilylmethyl)-*O*-methylcarbamat und 0,1% Methanol.

Bei einer nachfolgenden fraktionierten Destillation werden 249 g Isocyanatomethyl-trimethoxysilan in einer Reinheit von 98,9% erhalten.

### Beispiel 2: Modellreaktion: Reaktion einer Mischung aus α- und γ-Isocyanatosilanen mit einem kurzkettigen Polypropylenglycol

In einem 250 ml Reaktionsgefäß mit Tropftrichter, Rühr-, Kühl- und Heizmöglichkeiten werden 50,0 g (125 mMol) eines linearen Polypropylenglycols mit einer mittleren Molmasse Mₙ von 400 g/Mol (käuflich erhältlich bei Sigma-Aldrich) vorgelegt und für 2 h bei 80°C und 1 mbar unter Rühren getrocknet.

Danach werden 0,022 g (150 ppm bezogen auf die Reaktionsmischung nach vollständiger Zugabe aller Komponenten) eines bismuthaltigen Katalysators (käuflich erhältlich unter der Bezeichnung Borchi^{®} Kat 315 bei der Borchers GmbH, D-Langenfeld) zugegeben und anschließend eine Mischung aus 44,3 g (250 mMol) Isocyanatomethyl-trimethoxysilan (hergestellt nach Beispiel 1) und 51,3 g (250 mMol) 3-Isocyanatopropyl-trimethoxysilan (käuflich erhältlich unter der Bezeichnung GENIOSIL^{®} GF 40 bei der Wacker Chemie AG, D-München) unter Rühren innerhalb von 15 min zugetropft. Da die Reaktion stark exotherm ist, muss dies unter Kühlung erfolgen, so dass eine Reaktionstemperatur von 80 °C eingehalten wird. Danach wird für weitere 30 min bei 80 °C gerührt.

Eine anschließende 1H-NMR-Untersuchung der Reaktionsmischung zeigt, dass man im Rahmen der Messgenauigkeit (± ~5%) ebenso viele Kettenenden findet, die mit dem γ-Isocyanatosilan terminiert wurden, wie Kettenenden, die mit dem α-Isocyanatosilan terminiert wurden. Beide Isocyanatosilane besitzen somit gegenüber OH-terminierten Polyproplyenglycolen eine im Rahmen der Messgenauigkeit identische Reaktivität. Da beide Kettenenden unabhängig voneinander reagieren, weisen 50% der Polymere sowohl α- und γ-Silanterminierungen auf.

### Beispiel 3a: Polymer A: Polypropylenglycol mit 30% α-Trimethoxysilylmethyl-Endgruppen und 70% γ-Trimethoxysilylpropyl-Endgruppen

In einem 2000 ml Reaktionsgefäß mit Rühr-, Kühl- und Heizmöglichkeiten werden 1800,0 g (100 mMol) eines linearen Polypropylenglycols mit einer mittleren Molmasse Mₙ von 18 000 g/Mol (käuflich erhältlich unter der Bezeichnung Acclaim 18200 bei der Covestro AG, D-Leverkusen) vorgelegt und für 2 h bei 80°C und 1 mbar unter Rühren getrocknet.

Es wird auf Raumtemperatur abgekühlt, und anschließend werden 12,8 g (72 mMol) Isocyanatomethyl-trimethoxysilan (hergestellt nach Beispiel 1) und 34,5 g (168 mMol) 3-Isocyanatopropyl-trimethoxysilan (käuflich erhältlich unter der Bezeichnung GENIOSIL^{®} GF 40 bei der Wacker Chemie AG, D-München) zugegeben. Die Mischung wird unter Rühren auf 80°C erwärmt. Danach werden 0,24 g (150 ppm) eines bismuthaltigen Katalysators (käuflich erhältlich unter der Bezeichnung Borchi^{®} Kat 315 bei der Borchers GmbH, D-Langenfeld) zugegeben, wobei sich die Reaktionsmischung auf 84-85°C erwärmt. Die Reaktionsmischung wird für weitere 120 min bei 80°C gerührt.

Anschließend wird auf 60°C abgekühlt, und es werden 1,92 g (60 mMol) Methanol zugegeben und für weitere 30 min bei 60°C gerührt. In der resultierenden Polymermischung lassen sich IR-spektroskopisch keine Isocyanatgruppen mehr nachweisen. Man erhält eine klare, durchsichtige Polymermischung, die bei 25°C eine Viskosität von 25 Pas aufweist. Sie lässt sich problemlos weiterverarbeiten.

### Beispiel 3b: Polymer B: Polypropylenglycol mit 35% α-Trimethoxysilylmethyl-Endgruppen und 65% γ-Trimethoxysilylpropyl-Endgruppen

Es wird so vorgegangen wie in Beispiel 3a beschrieben, jedoch werden bezogen auf 1800,0 g (100 mMol) eines linearen Polypropylenglycols mit einer mittleren Molmasse Mₙ von 18 000 g/Mol 14,9 g (84 mMol) Isocyanatomethyl-trimethoxysilan und 32,0 g (156 mMol) 3-Isocyanatopropyl-trimethoxysilan eingesetzt.

In der resultierenden Polymermischung lassen sich nach der in Beispiel 3a beschriebenen Zugabe von 1,92 g (60 mMol) Methanol IR-spektroskopisch keine Isocyanatgruppen mehr nachweisen. Man erhält eine klare, durchsichtige Polymermischung, die bei 25°C eine Viskosität von 25 Pas aufweist. Sie lässt sich problemlos weiterverarbeiten.

### Beispiel 3c: Polymer C: Polypropylenglycol mit 40% α-Trimethoxysilylmethyl-Endgruppen und 60% γ-Trimethoxysilylpropyl-Endgruppen

Es wird so vorgegangen wie in Beispiel 3a beschrieben, jedoch werden bezogen auf 1800,0 g (100 mMol) eines linearen Polypropylenglycols mit einer mittleren Molmasse Mₙ von 18 000 g/Mol 17,0 g (96 mMol) Isocyanatomethyl-trimethoxysilan und 29,6 g (144 mMol) 3-Isocyanatopropyl-trimethoxysilan eingesetzt.

In der resultierenden Polymermischung lassen sich nach der in Beispiel 3a beschriebenen Zugabe von 1,92 g (60 mMol) Methanol IR-spektroskopisch keine Isocyanatgruppen mehr nachweisen. Man erhält eine klare, durchsichtige Polymermischung, die bei 25°C eine Viskosität von 25 Pas aufweist. Sie lässt sich problemlos weiterverarbeiten.

### Beispiel 3d: Polymer D: Polypropylenglycol mit 50% α-Trimethoxysilylmethyl-Endgruppen und 50% γ-Trimethoxysilylpropyl-Endgruppen

Es wird so vorgegangen wie in Beispiel 3a beschrieben, jedoch werden bezogen auf 1800,0 g (100 mMol) eines linearen Polypropylenglycols mit einer mittleren Molmasse Mₙ von 18 000 g/Mol 21,3 g (120 mMol) Isocyanatomethyl-trimethoxysilan und 24,6 g (120 mMol) 3-Isocyanatopropyl-trimethoxysilan eingesetzt.

In der resultierenden Polymermischung lassen sich nach der in Beispiel 3a beschriebenen Zugabe von 1,92 g (60 mMol) Methanol IR-spektroskopisch keine Isocyanatgruppen mehr nachweisen. Man erhält eine klare, durchsichtige Polymermischung, die bei 25°C eine Viskosität von 25 Pas aufweist. Sie lässt sich problemlos weiterverarbeiten.

### Beispiel 3e: Polymer E (nicht erfindungsgemäß): Polypropylenglycol mit 70% α-Trimethoxysilylmethyl-Endgruppen und 30% γ-Trimethoxysilylpropyl-Endgruppen

Es wird so vorgegangen wie in Beispiel 3a beschrieben, jedoch werden bezogen auf 1800,0 g (100 mMol) eines linearen Polypropylenglycols mit einer mittleren Molmasse Mₙ von 18 000 g/Mol 29,8 g (168 mMol) Isocyanatomethyl-trimethoxysilan und 14,8 g (72 mMol) 3-Isocyanatopropyl-trimethoxysilan eingesetzt.

In der resultierenden Polymermischung lassen sich nach der in Beispiel 3a beschriebenen Zugabe von 1,92 g (60 mMol) Methanol IR-spektroskopisch keine Isocyanatgruppen mehr nachweisen. Man erhält eine klare, durchsichtige Polymermischung, die bei 25°C eine Viskosität von 25 Pas aufweist. Sie lässt sich problemlos weiterverarbeiten.

### Beispiel 3f: Polymer F (nicht erfindungsgemäß) : Polypropylenglycol mit 100% α-Trimethoxysilylmethyl-Endgruppen

Es wird so vorgegangen wie in Beispiel 3a beschrieben, jedoch werden bezogen auf 1800,0 g (100 mMol) eines linearen Polypropylenglycols mit einer mittleren Molmasse Mₙ von 18 000 g/Mol 42,5 g (240 mMol) Isocyanatomethyl-trimethoxysilan und kein 3-Isocyanatopropyl-trimethoxysilan eingesetzt.

In der resultierenden Polymermischung lassen sich nach der in Beispiel 3a beschriebenen Zugabe von 1,92 g (60 mMol) Methanol IR-spektroskopisch keine Isocyanatgruppen mehr nachweisen. Man erhält eine klare, durchsichtige Polymermischung, die bei 25°C eine Viskosität von 25 Pas aufweist. Sie lässt sich problemlos weiterverarbeiten.

### Beispiel 4a: Herstellung einer 1K-Klebstoffformulierung

116,0 g Polymer A aus Beispiel 3a werden in einem Laborplanetenmischer der Fa. PC-Laborsystem, ausgestattet mit zwei Balkenmischern, bei ca. 25°C mit 80,0 g Diisoundecylphthalat (käuflich erhältlich bei der Fa. ExxonMobil) und 8,0 g Vinyltrimethoxysilan (käuflich erhältlich unter der GENIOSIL^{®} XL 10 bei der Firma Wacker Chemie AG, D-München) 2 Minuten bei 200 U/min homogenisiert.

Danach werden 192,0 g eines mit Stearinsäure beschichteten gemahlenes Calciumcarbonat mit einem mittleren Teilchendurchmesser (D50%) von ca. 0,4 µm (käuflich erhältlich unter der Bezeichnung Omyabond 302 bei der Omya, D-Köln) zugegeben und eine Minute unter Rühren bei 600 U/min aufgeschlossen. Schließlich werden 4,0 g 3-Aminopropyl-trimethoxysilan (käuflich erhältlich unter der GENIOSIL^{®} GF 96 bei der Firma Wacker Chemie AG, D-München) 1 Minute bei 200 U/min eingemischt und 1 Minute bei 200 U/min im Teilvakuum (ca. 100 mbar) homogenisiert und blasenfrei gerührt.

Die so erhaltene Masse wird in zwei 310 ml PE-Kartusche abgefüllt (ca. 200 g pro Kartusche). Eine Kartusche wird für 24 Stunden bei 20°C vor der Untersuchung gelagert. Die zweite Kartusche wird für 14 Tage bei 20°C vor der Untersuchung gelagert.

### Beispiel 4b: Herstellung einer 1K-Klebstoffformulierung

Es wird so vorgegangen wie in Beispiel 4a beschrieben, jedoch wird anstelle des Polymers A aus Beispiel 3a die identische Menge Polymer B aus Beispiel 3b eingesetzt.

Auch hier werden 2 Kartuschen erhalten, die für 24 h bzw. 14 Tage bei 20°C vor der Untersuchung gelagert werden.

### Beispiel 4c: Herstellung einer 1K-Klebstoffformulierung

Es wird so vorgegangen wie in Beispiel 4a beschrieben, jedoch wird anstelle des Polymers A aus Beispiel 3a die identische Menge Polymer C aus Beispiel 3c eingesetzt.

Auch hier werden 2 Kartuschen erhalten, die für 24 h bzw. 14 Tage bei 20°C vor der Untersuchung gelagert werden.

### Beispiel 4d: Herstellung einer 1K-Klebstoffformulierung

Es wird so vorgegangen wie in Beispiel 4a beschrieben, jedoch wird anstelle des Polymers A aus Beispiel 3a die identische Menge Polymer D aus Beispiel 3d eingesetzt. Zudem wird die Einsatzmenge des 3-Aminopropyl-trimethoxysilans von 4,0 g auf 2,0 g halbiert.

Auch hier werden 2 Kartuschen erhalten, die für 24 h bzw. 14 Tage bei 20°C vor der Untersuchung gelagert werden.

### Beispiel 4e (nicht erfindungsgemäß): Herstellung einer 1K-Klebstoffformulierung

Es wird so vorgegangen wie in Beispiel 4a beschrieben, jedoch wird anstelle des Polymers A aus Beispiel 3a die identische Menge Polymer E aus Beispiel 3e eingesetzt. Zudem wird die Einsatzmenge des 3-Aminopropyl-trimethoxysilans von 4,0 g auf 2,0 g halbiert.

Auch hier werden 2 Kartuschen erhalten, die für 24 h bzw. 14 Tage bei 20°C vor der Untersuchung gelagert werden.

### Beispiel 4f (nicht erfindungsgemäß): Herstellung einer 1K-Klebstoffformulierung

Es wird so vorgegangen wie in Beispiel 4a beschrieben, jedoch wird anstelle des Polymers A aus Beispiel 3a die identische Menge Polymer F aus Beispiel 3f eingesetzt. Zudem wird die Einsatzmenge des 3-Aminopropyl-trimethoxysilans von 4,0 g auf 2,0 g halbiert.

Auch hier werden 2 Kartuschen erhalten, die für 24 h bzw. 14 Tage bei 20°C vor der Untersuchung gelagert werden.

### Beispiel 4g (nicht erfindungsgemäß): Herstellung einer 1K-Klebstoffformulierung

Es wird so vorgegangen wie in Beispiel 4a beschrieben, jedoch werden anstelle von 116 g Polymer A aus Beispiel 3a 46,4 g Polymer F aus Beispiel 3f und 69,6 g eines silanterminierten Polypropylenglycols mit einer mittleren Molmasse (Mₙ) von 18 000 g/mol und Endgruppen der Formel -O-C(=O)-NH-(CH₂)₃-Si(OCH₃)₃ (käuflich erhältlich unter der Bezeichnung GENIOSIL^{®} STP-E35 bei der Wacker Chemie AG, D-München) eingesetzt. Zudem wird die Einsatzmenge des 3-Aminopropyl-trimethoxysilans von 4,0 g auf 2,0 g halbiert.

Auch hier werden 2 Kartuschen erhalten, die für 24 h bzw. 14 Tage bei 20°C vor der Untersuchung gelagert werden.

### Beispiel 4h (nicht erfindungsgemäß): Herstellung einer 1K-Klebstoffformulierung

Es wird so vorgegangen wie in Beispiel 4a beschrieben, jedoch wird anstelle des Polymers A aus Beispiel 3a die identische Menge Polymer E aus Beispiel 3e und anstelle von Vinyltrimethoxysilan eine identische Menge *N*-Trimethoxysilylmethyl-*O-*Methylcarbamat (käuflich erhältlich unter GENIOSIL^{®} XL 63 bei der Wacker Chemie AG, D-München) eingesetzt. Zudem wird die Einsatzmenge des 3-Aminopropyl-trimethoxysilans von 4,0 g auf 2,0 g halbiert.

Auch hier werden 2 Kartuschen erhalten, die für 24 h bzw. 14 Tage bei 20°C vor der Untersuchung gelagert werden.

### Beispiel 4i (nicht erfindungsgemäß): Herstellung einer 1K-Klebstoffformulierung

Es wird so vorgegangen wie in Beispiel 4a beschrieben, jedoch wird anstelle des Polymers A aus Beispiel 3a die identische Menge Polymer F aus Beispiel 3f und anstelle von Vinyltrimethoxysilan eine identische Menge *N*-Trimethoxysilylmethyl-*O-*Methylcarbamat (käuflich erhältlich unter GENIOSIL^{®} XL 63 bei der Wacker Chemie AG, D-München) eingesetzt. Zudem wird die Einsatzmenge des 3-Aminopropyl-trimethoxysilans von 4,0 g auf 2,0 g halbiert.

Auch hier werden 2 Kartuschen erhalten, die für 24 h bzw. 14 Tage bei 20°C vor der Untersuchung gelagert werden.

### Beispiel 5: Bestimmung von Eigenschaftsprofilen der hergestellten Klebstoffe

Die in den Beispielen 4a bis 4i erhaltenen Klebstoffe wurden, sofern sie nicht bereits in der Kartusche ausgehärtet waren, vernetzen gelassen und hinsichtlich ihrer Hautbildung und ihrer mechanischen Eigenschaften untersucht. Die Ergebnisse finden sich in Tabelle 1.

### Hautbildungszeit (HBZ)

Zur Bestimmung der Hautbildungszeit werden die in den Beispielen erhaltenen vernetzbaren Massen in einer 2 mm dicken Schicht auf PE-Folie aufgetragen und bei Normklima (23°C und 50% relative Luftfeuchtigkeit) gelagert. Während des Aushärtens wird einmal pro Minute die Bildung einer Haut getestet. Dazu wird ein trockener Laborspatel vorsichtig auf die Oberfläche der Probe aufgesetzt und nach oben gezogen. Bleibt Probe am Spatel kleben, hat sich noch keine Haut gebildet. Bleibt keine Probe am Spatel mehr kleben, so hat sich eine Haut gebildet und die Zeit wird notiert.

### Mechanische Eigenschaften

Die Massen werden jeweils auf ausgefräste Teflonplatten mit 2 mm Tiefe ausgestrichen und 2 Wochen bei 23°C und 50% relativer Luftfeuchte gehärtet.

Die Shore-A-Härte wird gemäß DIN 53505 bestimmt.

Die Reißfestigkeit wird gemäß DIN 53504-S1 bestimmt. Reißdehnung wird gemäß DIN 53504-S1 bestimmt.

Das 100%-Modul wird gemäß DIN 53504-S1 bestimmt.

**Tabelle 1:**

| **Beispiel** | **4a** | **4b** | **4c** | **4d** | **4e*** | **4f*** | **4g*** | **4h*** | **4i*** |
|---|---|---|---|---|---|---|---|---|---|
| | **erfindungsgemäß** | | | | **nicht erfindungsgemäß** | | | | |
| Verhältnis α : γ | 30:70 | 35:70 | 40:60 | 50:50 | 70:30 | 100:0 | ** | 70:30 | 100:0 |
| Wasserfänger | V-TMO | V-TMO | V-TMO | V-TMO | V-TMO | V-TMO | V-TMO | C-TMO | C-TMO |
| Aminosilan-Gehalt [%] | 1 | 1 | 1 | 0,5 | 0,5 | 0,5 | 0,5 | 0,5 | 0,5 |
| HZB 1 Tag Lagerung [min] | 32 | 17 | 10 | 3 | 1 | fest *** | fest *** | 6 | 0,5 |
| HZB 24 Tage Lagerung [min] | 35 | 20 | 12 | 5 | fest *** | fest *** | fest *** | 5 | fest *** |
| Härte [Shore A] | 39 | 41 | 37 | 37 | 39 | | | 38 | 38 |
| 100%-Modul [N/mm] | 1,0 | 1,1 | 0, 8 | 0, 9 | 1,0 | | | 1,1 | 1,1 |
| Reißfestigkeit [N/mm] | 2, 4 | 2,5 | 2, 4 | 2,3 | 2,2 | | | 2,1 | 2,1 |
| Reißdehnung [%] | 271 | 259 | 288 | 265 | 250 | | | 289 | 288 |

| | | | | | | | | | |
|---|---|---|---|---|---|---|---|---|---|
| * nicht erfindungsgemäß ** Mischung aus 40% Polymer F mit 100% α-Silanterminierung und 60% eines Polymers mit 100% γ-Silanterminierung *** bereits in der Kartusche ausgehärtet | | | | | | | | | |

V-TMO steht für Vinyltrimethoxysilan und C-TMO für N-Trimethoxysilylmethyl-O-Methylcarbamat.

### Beispiel 6a: Herstellung einer 1K Dichtstoffformulierung

30,0 g Polymer A aus Beispiel 3a werden in einem Laborplanetenmischer der Fa. PC-Laborsystem, ausgestattet mit einem Balkenmischer und einem Dissolver, bei ca. 25°C mit 12,0 g eines einseitig silanterminierten Polypropylenglycols mit einer mittleren Molmasse Mₙ von 5000 g/mol und Endgruppen der Formel -O-C(=O)-NH-(CH₂)₃-Si(OCH3)3 (käuflich erhältlich unter der Bezeichnung GENIOSIL^{®} XM25 bei der Wacker Chemie AG, D-München), 43,0 g Cyclohexan-1,2-dicarbonsäurediisononyl_ester (käuflich erhältlich unter der Bezeichnung "Hexamoll DINCH" bei der BASF SE; D-Ludwigshafen), 3,0 g Vinyltrimethoxysilan und 1,0 g einer Stabilisatormischung (Mischung aus 20% Irganox^{®} 1135 (CAS-Nr. 125643-61-0), 40% Tinuvin^{®} 571 (CAS-NR. 23328-53-2) und 40% Tinuvin^{®} 765 (CAS-NR. 41556-26-7), käuflich erhältlich unter der Bezeichnung TINUVIN^{®} B 75 bei der BASF SE; D-Ludwigshafen) 2 Minuten mit dem Balkenmischer bei 200 U/min homogenisiert.

Danach werden 102,0 g eines mit Stearinsäure beschichteten Calciumcarbonats mit einem mittleren Teilchendurchmesser (D50%) von ca. 2,0 µm (käuflich erhältlich unter der Bezeichnung Omyabond 520 bei der Omya, D-Köln) und 8 g eines mikronisierten Polymamidwachses (käuflich erhältlich unter der Bezeichnung Crayvallac^{®} SLC von der Arkema, Frankreich) zugegeben und eine Minute unter Rühren mit dem Balkenmischer bei 200 U/min eingerührt. Danach wird unter Rührung mit 500 U/min mit dem Balkenmischer und 1000 U/min mit dem Dissolver auf 80 °C erwärmt, die Temperatur für 15 min gehalten und anschließend wieder auf 35 °C abgekühlt.

Schließlich werden 1,0 g *N*-(2-Aminoethy)-Aminopropyl-trimethoxysilan (käuflich unter der Bezeichnung GENIOSIL^{®} GF 9 bei der Wacker Chemie AG, D-München) zugegeben und für 2 Minuten bei 600 U/min (Balkenmischer) und 1000 U/min (Dissolver) im Teilvakuum (ca. 100 mbar) homogenisiert und blasenfrei gerührt.

Die so erhaltene Masse wird in eine 310 ml PE-Kartuschen abgefüllt und vor der Untersuchung für 24 Stunden bei 20°C gelagert.

### Beispiel 6b: Herstellung einer 1K-Dichtstoffformulierung

Es wird so vorgegangen wie in Beispiel 6a beschrieben, jedoch wird anstelle des Polymers A aus Beispiel 3a die identische Menge Polymer B aus Beispiel 3b eingesetzt.

Auch hier wird eine Kartusche befüllt, die vor der Untersuchung für 24 h 20°C gelagert wird.

### Beispiel 6c: Herstellung einer 1K-Dichtstoffformulierung

Es wird so vorgegangen wie in Beispiel 6a beschrieben, jedoch wird anstelle des Polymers A aus Beispiel 3a die identische Menge Polymer C aus Beispiel 3c eingesetzt.

Auch hier wird eine Kartusche befüllt, die vor der Untersuchung für 24 h 20°C gelagert wird.

### Beispiel 6d: Herstellung einer 1K-Dichtstoffformulierung

Es wird so vorgegangen wie in Beispiel 6a beschrieben, jedoch wird anstelle des Polymers A aus Beispiel 3a die identische Menge Polymer D aus Beispiel 3d eingesetzt.

Auch hier wird eine Kartusche befüllt, die vor der Untersuchung für 24 h 20°C gelagert wird.

### Beispiel 6e (nicht erfindungsgemäß): Herstellung einer 1K-Dichtstoffformulierung

Es wird so vorgegangen wie in Beispiel 6a beschrieben, jedoch wird anstelle des Polymers A aus Beispiel 3a die identische Menge Polymer E aus Beispiel 3e eingesetzt.

Auch hier wird eine Kartusche befüllt, die vor der Untersuchung für 24 h 20°C gelagert wird.

### Beispiel 6f (nicht erfindungsgemäß): Herstellung einer 1K-Dichtstoffformulierung

Es wird so vorgegangen wie in Beispiel 6a beschrieben, jedoch werden anstelle von 30,0 g Polymer A aus Beispiel 3a 12,0 g Polymer F aus Beispiel 3f und 18 g eines silanterminierten Polypropylenglycols mit einer mittleren Molmasse (Mₙ) von 18 000 g/mol und Endgruppen der Formel -O-C(=O)-NH-(CH₂)₃-Si(OCH₃)₃ (käuflich erhältlich unter der Bezeichnung GENIOSIL^{®} STP-E35 bei der Wacker Chemie AG, D-München) eingesetzt.

Auch hier wird eine Kartusche befüllt, die vor der Untersuchung für 24 h 20°C gelagert wird.

### Beispiel 7: Bestimmung von Eigenschaftsprofilen der hergestellten Dichtstoffe

Die in den Beispielen 6a bis 6f erhaltenen Dichtstoffe wurden, sofern sie nicht bereits in der Kartusche ausgehärtet waren, vernetzen gelassen und hinsichtlich ihrer Hautbildung und ihrer mechanischen Eigenschaften untersucht. Die Ergebnisse finden sich in Tabelle 2.

Hautbildungszeit, Shore-A-Härte, Reißfestigkeit und 100%-Modul werden dabei bestimmt wie in Beispiel 5 beschrieben.

Die Messung der Rückstellung erfolgt entsprechend der DIN EN ISO 7389, Lagerung nach Verfahren B.

Die Rückstellung sollte bei niedermoduligen Dichtstoffen vorzugsweise über 70% betragen.

**Tabelle 2:**

| **Beispiel** | **6a** | **6b** | **6c** | **6d** | **6e*** | **6f*** |
|---|---|---|---|---|---|---|
| | **erfindungsgemäß** | | | | **nicht erfindungsgemäß** | |
| Verhältnis α : γ | 30:70 | 35:70 | 40:60 | 50:50 | 70:30 | ** |
| HZB 1 Tag Lagerung [min] | 39 | 29 | 21 | 5 | fest *** | fest *** |
| Härte [Shore A] | 28 | 24 | 20 | 22 | | |
| 100%-Modul [N/mm] | 0,45 | 0,43 | 0,31 | 0,40 | | |
| Reißfestigkeit [N/mm] | 1,4 | 1,2 | 1,0 | 1,2 | | |
| Reißdehnung [%] | 900 | 923 | 811 | 650 | | |
| Rückstellung [%] | 84 | 79 | 72 | 60 | | |

| | | | | | | |
|---|---|---|---|---|---|---|
| * nicht erfindungsgemäß ** Mischung aus 40% Polymer F mit 100% α-Silanterminierung und 60% eines Polymers mit 100% γ-Silanterminierung *** bereits in der Kartusche ausgehärtet. | | | | | | |

## Patentansprüche

1. Vernetzbare Zusammensetzungen (Z) enthaltend
(A) 100 Gewichtsteile Verbindungen der Formel
Y-[(CR¹₂)ₐ-Si(OR)₃]ₓ (I),
wobei
Y einen x-wertigen, über Stickstoff oder Sauerstoff gebundenen Polymerrest bedeutet,
R gleich oder verschieden sein kann und Wasserstoffatom oder einen einwertigen, gegebenenfalls substituierten Kohlenwasserstoffrest darstellt,
R¹ gleich oder verschieden sein kann und Wasserstoffatom oder einen einwertigen, gegebenenfalls substituierten Kohlenwasserstoffrest darstellt, der über Stickstoff, Phosphor, Sauerstoff, Schwefel oder Carbonylgruppe an das Kohlenstoffatom angebunden sein kann,
x eine ganze Zahl von 2 bis 10 ist und
a eine ganze Zahl von 1 bis 10 ist,
mit der Maßgabe, dass in Komponente (A) in 5 bis 60% aller Einheiten [(CR¹₂)ₐ-Si(OR)₃] a gleich 1 ist und in mindestens 5% aller Verbindungen der Formel (I) pro Molekül mindestens ein a gleich 1 ist und mindestens ein a für eine ganze Zahl von 2 bis 10 steht,
(B) mindestens 0,1 Gewichtsteile Silane ausgewählt aus Tetraethoxysilan und Silanen der Formel
R⁴-Si(CH₃)_{b}(OR²)_{3-b} (II),
wobei
R² gleich oder verschieden sein kann und Wasserstoffatom oder einen einwertigen, gegebenenfalls substituierten Kohlenwasserstoffrest darstellt,
R⁴ einen einwertigen, gegebenenfalls substituierten Kohlenwasserstoffrest, der durch Sauerstoffatome unterbrochenen sein kann, darstellt, der kein Stickstoffatom enthält, welches nicht direkt an eine Carbonylgruppe gebunden ist, und kein Heteroatom aufweist, welches nur durch ein einziges Kohlenstoffatom von dem Siliciumatom getrennt ist, und
b 0 oder 1 ist sowie
(C) höchstens 2 Gewichtsteile einer oder mehrerer Silane der Formel
X-CH₂-SiR⁶_{c}(OR⁵)_{3-c} (III),
wobei
R⁵ gleich oder verschieden sein kann und Wasserstoffatom oder einen einwertigen, gegebenenfalls substituierten Kohlenwasserstoffrest darstellt,
R⁶ gleich oder verschieden sein kann und einen einwertigen, gegebenenfalls substituierten Kohlenwasserstoffrest darstellt,
X eine Gruppe der Formel -NR⁷₂, -NR⁷-CO-R⁸, -NR⁷-CO-OR⁸, -NR⁷-CO-NR⁸₂, -OR⁷, -O-CO-R⁷, O-CO-OR⁷, O-CO-NR⁷₂ oder einen über N-Atom gebundenen Heterocyclus darstellt,
R⁷ gleich oder verschieden sein kann und Wasserstoffatom oder einen einwertigen, gegebenenfalls substituierten Kohlenwasserstoffrest mit 1 bis 6 Kohlenstoffatomen darstellt,
R⁸ gleich oder verschieden sein kann und Wasserstoffatom oder einen einwertigen, gegebenenfalls substituierten Kohlenwasserstoffrest mit 1 bis 6 Kohlenstoffatomen darstellt und
c 0 oder 1 ist.

2. Vernetzbare Zusammensetzungen gemäß Anspruch 1, **dadurch gekennzeichnet, dass** a bei mindestens 10% bis 45% aller Einheiten [(CR¹₂)ₐ-Si(OR)₃] in Komponente (A) den Wert 1 annimmt.

3. Vernetzbare Zusammensetzungen gemäß Anspruch 1 oder 2, **dadurch gekennzeichnet, dass** mindestens 15% aller Verbindungen der Formel (I) pro Molekül sowohl über mindestens eine Gruppe [(CR¹₂)-Si(OR)₃] als auch über mindestens eine Gruppe [(CR¹₂)ₐ-Si(OR)₃], in der a für eine ganze Zahl von 2 bis 10 steht, verfügen.

4. Vernetzbare Zusammensetzungen gemäß einem oder mehreren der Ansprüche 1 bis 3, **dadurch gekennzeichnet, dass** mindestens 15% aller Verbindungen der Formel (I) pro Molekül sowohl über mindestens eine Gruppe [(CR¹₂)-Si(OR)₃] als auch über mindestens eine Gruppe [(CR¹₂)₃-Si(OR)₃], in der a für eine ganze Zahl von 2 bis 10 steht, verfügen.

5. Vernetzbare Zusammensetzungen gemäß einem oder mehreren der Ansprüche 1 bis 4, **dadurch gekennzeichnet, dass** es sich bei den Verbindungen (A) um Polyalkylenglycole handelt, die Endgruppen mit Propylenspacer der Formel
-O-C(=O)-NH-(CH₂)₃-Si(OC₂H₅)₃
oder
-O-C(=O)-NH-(CH₂)₃-Si(OCH₃)₃
in Kombination mit Endgruppen mit Methylenspacer der Formel
-O-C (=O) -NH-CH₂-Si(OCH₃)₃
oder
-O-C (=O) -NH-CH₂-Si((OC₂H₅)₃
aufweisen.

6. Verfahren zur Herstellung der Zusammensetzungen (Z) gemäß einem oder mehreren der Ansprüche 1 bis 5 durch Mischen der einzelnen Komponenten in beliebiger Reihenfolge.

7. Formkörper hergestellt durch Vernetzung der Zusammensetzungen (Z) gemäß einem oder mehreren der Ansprüche 1 bis 5 oder hergestellt nach Anspruch 6.

8. Formkörper gemäß Anspruch 7, **dadurch gekennzeichnet, dass** sie eine Reißdehnungen von mindestens 200%, bestimmt gemäß DIN 53504-S1, und eine Rückstellung von mindestens 70%, bestimmt gemäß DIN EN ISO 7389 bei Lagerung nach Verfahren B, aufweisen.

9. Verfahren zur Verklebung von Substraten, bei denen die Zusammensetzung (Z) gemäß einem oder mehreren der Ansprüche 1 bis 5 oder hergestellt nach Anspruch 6 auf die Oberfläche mindestens eines Substrates aufgebracht, diese Oberfläche dann mit dem zu verklebenden zweiten Substrat in Kontakt gebracht und anschließend vernetzen gelassen wird.

10. Verfahren zur Herstellung von Materialverbunden, bei denen die Zusammensetzung (Z) gemäß einem oder mehreren der Ansprüche 1 bis 5 oder hergestellt nach Anspruch 6 auf mindestens ein Substrat aufgebracht und anschließend vernetzen gelassen wird.

## Claims

1. Crosslinkable compositions (Z) comprising
(A) 100 parts by weight of compounds of the formula
Y-[(CR¹₂)ₐ-Si(OR)₃]ₓ (I),
where
Y is an x-valent polymer radical bonded via nitrogen or oxygen,
R may be identical or different and is a hydrogen atom or a monovalent, optionally substituted hydrocarbon radical,
R¹ may be identical or different and is a hydrogen atom or a monovalent, optionally substituted hydrocarbon radical which may be attached to the carbon atom via nitrogen, phosphorus, oxygen, sulfur or a carbonyl group, x is an integer from 2 to 10 and
a is an integer from 1 to 10,
with the proviso that in component (A) in 5% to 60% of all units [(CR¹₂)ₐ-Si(OR)₃] a is 1 and in at least 5% of all compounds of formula (I) per molecule at least one a is 1 and at least one a is an integer from 2 to 10,
(B) at least 0.1 parts by weight of silanes selected from tetraethoxysilane and silanes of the formula
R⁴-Si(CH₃)_{b}(OR²)_{3-b} (II),
where
R² may be identical or different and is a hydrogen atom or a monovalent, optionally substituted hydrocarbon radical,
R⁴ is a monovalent, optionally substituted hydrocarbon radical which may be interrupted by oxygen atoms and which contains no nitrogen atom not bonded directly to a carbonyl group, and no heteroatom separated only by a single carbon atom from the silicon atom, and
b is 0 or 1, and
(C) at most 2 parts by weight of one or more silanes of the formula
X-CH₂-SiR⁶_{c}(OR⁵)_{3-c} (III),
where
R⁵ may be identical or different and is a hydrogen atom or a monovalent, optionally substituted hydrocarbon radical,
R⁶ may be identical or different and is a monovalent, optionally substituted hydrocarbon radical,
X is a group of the formula -NR⁷₂, -NR⁷-CO-R⁸, -NR⁷-CO-OR⁸, -NR⁷-CO-NR⁸₂, -OR⁷, -O-CO-R⁷, O-CO-OR⁷, O-CO-NR⁷₂ or a heterocycle bonded via an N atom,
R⁷ may be identical or different and is a hydrogen atom or a monovalent, optionally substituted hydrocarbon radical having 1 to 6 carbon atoms,
R⁸ may be identical or different and is a hydrogen atom or a monovalent, optionally substituted hydrocarbon radical having 1 to 6 carbon atoms and
c is 0 or 1.

2. Crosslinkable compositions according to Claim 1, **characterized in that** the value of a in at least 10% to 45% of all units [(CR¹₂)ₐ-Si(OR)₃] in component (A) is 1.

3. Crosslinkable compositions according to Claim 1 or 2, **characterized in that** at least 15% of all compounds of formula (I) possess per molecule both at least one group [(CR¹₂)-Si(OR)₃] and at least one group [(CR¹₂)ₐ-Si(OR)₃], in which a is an integer from 2 to 10.

4. Crosslinkable compositions according to one or more of Claims 1 to 3, **characterized in that** at least 15% of all compounds of formula (I) possess per molecule both at least one group [(CR¹₂)-Si(OR)₃] and at least one group [(CR¹₂)₃-Si(OR)₃], in which a is an integer from 2 to 10.

5. Crosslinkable compositions according to one or more of Claims 1 to 4, **characterized in that**
the compounds (A) are polyalkylene glycols which have end groups with propylene spacer of the formula
-O-C(=O)-NH-(CH₂)₃-Si(OC₂H₅)₃
or
-O-C(=O)-NH-(CH₂)₃-Si(OCH₃)₃
in combination with end groups with methylene spacer of the formula
-O-C(=O)-NH-CH₂-Si(OCH₃)₃
or
-O-C(=O)-NH-CH₂-Si((OC₂H₅)₃.

6. Process for producing the compositions (Z) according to one or more of Claims 1 to 5 by mixing the individual components in any desired order.

7. Shaped articles produced by crosslinking the compositions (Z) according to one or more of Claims 1 to 5 or produced according to Claim 6.

8. Shaped articles according to Claim 7, **characterized in that** they have an elongation at break of at least 200%, determined in accordance with DIN 53504-S1, and a resilience of at least 70%, determined in accordance with DIN EN ISO 7389 when stored according to Method B.

9. Process for adhesively bonding substrates, in which the composition (Z) according to one or more of Claims 1 to 5 or produced according to Claim 6 is applied to the surface of at least one substrate, this surface is then contacted with the second substrate to be bonded and subsequently left to crosslink.

10. Process for producing material composites, in which the composition (Z) according to one or more of Claims 1 to 5 or produced according to Claim 6 is applied to at least one substrate and subsequently left to crosslink.

## Revendications

1. Compositions réticulables (Z) contenant
(A) 100 parties en poids de composés de formule
Y-[(CR¹₂)ₐ-Si(OR)₃]ₓ (I),
dans laquelle
Y représente un résidu polymère évalué x-valent lié par un atome d'azote ou d'oxygène,
R peut être identique ou différent et représente un atome d'hydrogène ou un radical hydrocarboné monovalent, éventuellement substitué,
R¹ peut être identique ou différent et représente un atome d'hydrogène ou un radical hydrocarboné monovalent, éventuellement substitué, qui peut être lié à l'atome de carbone par un atome d'azote, de phosphore, d'oxygène, de soufre ou un groupe carbonyle,
x est un nombre entier valant de 2 à 10 et
a est un nombre entier valant de 1 à 10,
étant entendu que dans le composant (A) dans 5 à 60 % de toutes les unités [(CR¹₂)ₐ-Si(OR₎₃] a est égal à 1 et dans au moins 5 % de tous les composés de formule (I) par molécule au moins un a est égal à 1 et au moins un a représente un nombre entier valant de 2 à 10,
(B) au moins 0,1 partie en poids de silanes choisis parmi le tétraéthoxysilane et les silanes de formule
R⁴-Si(CH₃)_{b}(OR²)_{3-b} (II),
dans laquelle
R² peut être identique ou différent et représente un atome d'hydrogène ou un radical hydrocarboné monovalent éventuellement substitué,
R⁴ représente un radical hydrocarboné monovalent, éventuellement substitué qui peut être interrompu par des atomes d'oxygène, qui ne contient pas d'atome d'azote qui n'est pas directement lié à un groupe carbonyle, et ne comporte pas d'hétéroatome qui n'est séparé de l'atome de silicium que par un seul atome de carbone, et
b est 0 ou 1, ainsi que
(C) au maximum 2 parties en poids d'un ou de plusieurs silanes de formule
X-CH₂-SiR⁶_{c}(OR⁵)_{3-c} (III),
dans laquelle
R⁵ peut être identique ou différent et représente un atome d'hydrogène ou un radical hydrocarbonés monovalents, éventuellement substitués,
les R⁶ peuvent être identiques ou différents et représentent des radicaux hydrocarboné monovalent éventuellement substitué,
X représente un groupe de formule -NR⁷₂, -NR⁷-COR⁸, -NR⁷-CO-OR⁸, -NR⁷-CO-NR⁸₂, -OR⁷ , -O-CO-R⁷, O-CO-OR⁷, O-CO-NR⁷₂ ou un hétérocycle lié à un atome d(azote,
R⁷ peut être identique ou différent et représente un atome d'hydrogène ou un radical hydrocarboné monovalent éventuellement substitué, ayant de 1 à 6 atomes de carbone,
R⁸ peut être identique ou différent et représente un atome d'hydrogène ou un radical hydrocarboné monovalent éventuellement substitué, ayant de 1 à 6 atomes de carbone,
c est 0 ou 1,

2. Compositions réticulables selon la revendication 1, **caractérisées en ce que** dans au moins 10 % à 45 % de toutes les unités [(CR¹₂)ₐ-Si(OR)₃] dans le composant (A) a prend la valeur 1.

3. Compositions réticulables selon la revendication 1 ou 2, **caractérisées en ce que** qu'au moins 15 % de tous les composés de formule (I) sont dotés par molécule aussi bien d'au moins un groupe [(CR¹₂)-Si (OR)₃] que d'au moins un groupe [(CR¹₂)ₐ-Si(OR)₃], dans laquelle a représente un nombre entier valant de 2 à 10.

4. Compositions réticulables selon une ou plusieurs des revendications 1 à 3, **caractérisées en ce que** qu'au moins 15 % de tous les composés de formule (I) sont dotés par molécule aussi bien d'au moins un groupe [(CR¹₂)-Si(OR)₃] que d'au moins un groupe [(CR¹₂)₃-Si(OR)₃], dans laquelle a représente un nombre entier valant de 2 à 10.

5. Compositions réticulables selon une ou plusieurs des revendications 1 à 4, **caractérisées en ce que** pour ce qui des composés (A) il s'agit de polyalkylèneglycols qui comportent des groupes en bout de chaîne à espaceurs propylène de formule
-O-C (=O)-NH-(CH₂)₃-Si(OC₂H₅)₃
ou
-O-C(=O)-NH-(CH₂)₃-Si(OCH₃)₃ en association avec des groupes en bout de chaîne à espaceurs méthylène de formule
-O-C(=O)-NH-CH₂-Si(OCH₃)₃
ou
-O-C(=O)-NH-CH₂-Si((OC₂H₅)₃.

6. Procédé de préparation des compositions (Z) selon une ou plusieurs des revendications 1 à 5, par mélange des composants individuels en un ordre quelconque.

7. Corps moulés, produits par réticulation des compositions (Z) selon une ou plusieurs des revendications 1 à 5 ou préparées par le procédé selon la revendication 6.

8. Corps moulés selon la revendication 7, **caractérisé en ce qu'**ils présentent des allongement à la rupture d'au moins 200 %, déterminé selon DIN 53504-S1, et un rétablissement de forme d'au moins 70 %, déterminé selon DIN EN ISO 7389 au stockage selon le procédé B.

9. Procédé pour le collage de substrats, dans lequel la composition (Z) selon une ou plusieurs des revendications 1 à 5 ou préparée selon la revendication 6 est appliquée sur la surface d'au moins un substrat, cette surface est ensuite mise en contact avec le second substrat à coller et ensuite mise à réticuler.

10. Procédé pour la production de composites de matériaux, dans lequel la composition (Z) selon une ou plusieurs des revendications 1 à 5 ou préparée selon la revendication 6 est appliquée sur au moins un substrat et ensuite mise à réticuler.
